# EUROPEAN PATENT APPLICATION

(11) **EP 4 513 402 A1**
(43) Date of publication of application: **26.02.2025**
(21) Application number: 23791875.0
(22) Date of filing: 19.04.2023
(51) Int. Cl.: G06Q 10/08, A47F 3/00

(54) **CONTROL METHOD, PROGRAM, SHIPPING SYSTEM, AND SHOWCASE**

(30) Priority: 19.04.2022 JP 2022068939
(71) Applicant: Panasonic Intellectual Property Corporation of America, Torrance, CA 90504 (US)
(72) Inventor: AOYAMA, Hideki, Kadoma-shi, Osaka 571-0057 (NE); TAKAHAMA, Takuya, Kadoma-shi, Osaka 571-0057 (JP); OSHIMA, Mitsuaki, Kadoma-shi, Osaka 571-0057 (JP)
(74) Representative: Eisenführ Speiser
(86) International application number: PCT/JP2023/015539
(87) International publication number: WO 2023/204227

(57) **Abstract**

A control method used in a shipping system (2600) including a display device (2610) includes: obtaining a first product ID identifying a first product, based on sensing data obtained from a sensor; obtaining a first bottom image showing a shape of a bottom of the first product, based on (i) a first database that associates and manages product IDs and images each of which shows a shape of a bottom surface of the product corresponding to the product ID, and (ii) the obtained first product ID; and controlling the display device (2610) to display the first bottom image in a placement area for placing the first product.

## Description

### [Technical Field]

The present disclosure relates to a control method, a program, a shipping system, and a showcase.

### [Background Art]

Patent Literature (PTL) 1 discloses a heating chamber having a lower surface on which a guide mark indicating the optimal placement position for food is formed by light from a light emitter.

### [Citation List]

### [Patent Literature]

[PTL 1] Japanese Patent No. 6746332

### [Summary of Invention]

### [Technical Problem]

However, the heating chamber disclosed in PTL 1 above can be improved upon.

Accordingly, the present disclosure provides a control method and the like that improve upon the above related art.

### [Solution to Problem]

A control method according to one aspect of the present disclosure is a control method used in a shipping system including a display device, and includes: obtaining a first product ID identifying a first product, based on sensing data obtained from a sensor; obtaining a first bottom image showing a shape of a bottom of the first product, based on (i) a first database that associates and manages product IDs and images each of which shows a shape of a bottom surface of a product corresponding to the product ID, and (ii) the first product ID obtained; and controlling the display device to display the first bottom image in a placement area for placing the first product.

These general or specific aspects may be implemented as an integrated circuit, a computer program, a computer-readable recording medium such as CD-ROM, or any combination thereof.

### [Advantageous Effects of Invention]

The control method and the like according to the present disclosure are capable of improving upon the related art.

### [Brief Description of Drawings]

[FIG. 1]

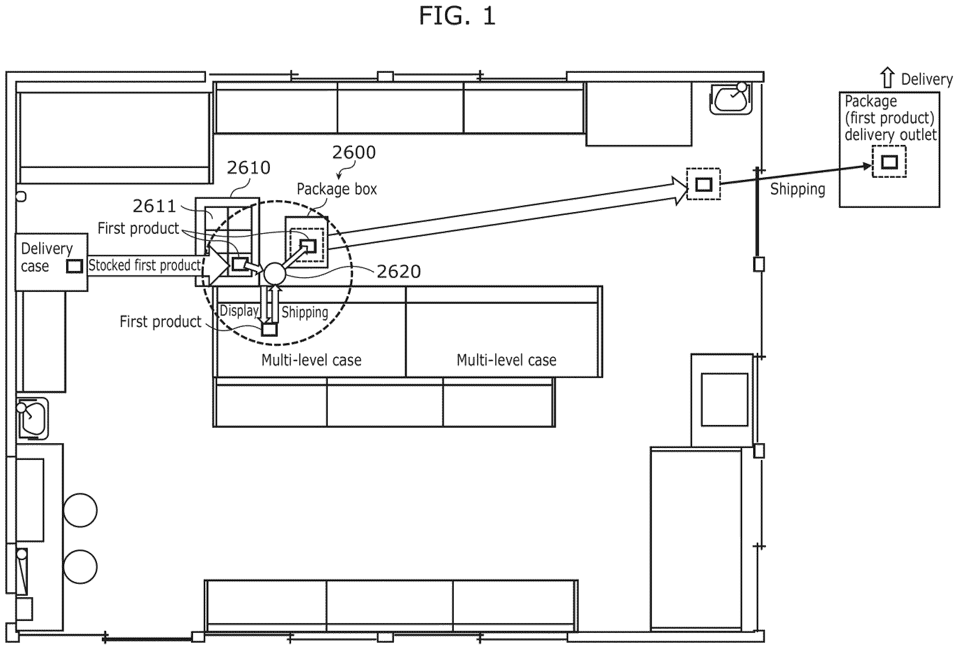

   FIG. 1 illustrates an example of a shipping system according to an embodiment of the present disclosure.
[FIG. 2]

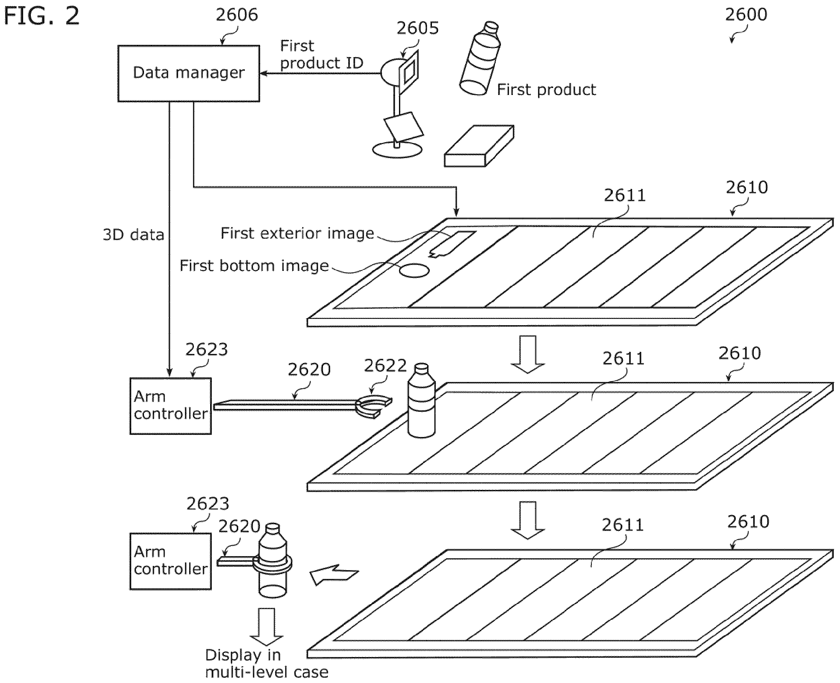

   FIG. 2 illustrates an example of a stocked first product being placed on a display device and displayed in a multi-level case in a shipping system according to an embodiment of the present disclosure.
[FIG. 3]

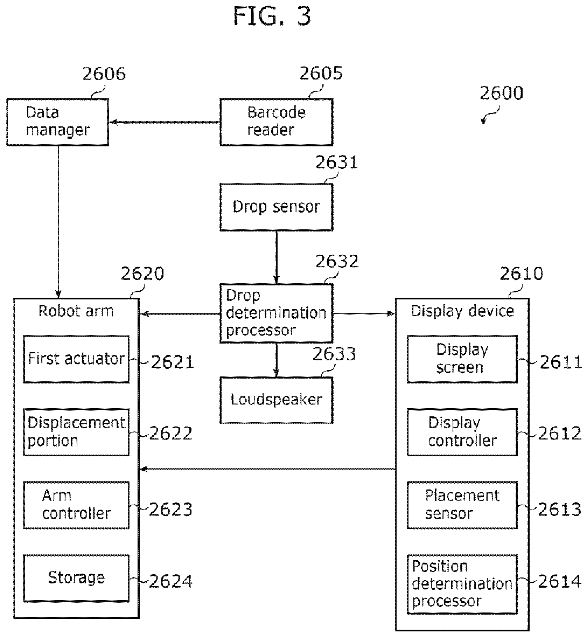

   FIG. 3 is a block diagram illustrating an example of a shipping system according to an embodiment of the present disclosure.
[FIG. 4]

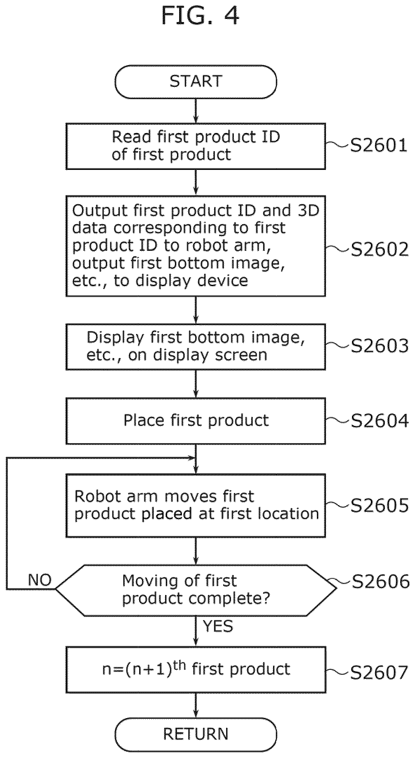

   FIG. 4 is a flowchart illustrating Operation Example 1 of the operation of a shipping system according to an embodiment of the present disclosure.
[FIG. 5]

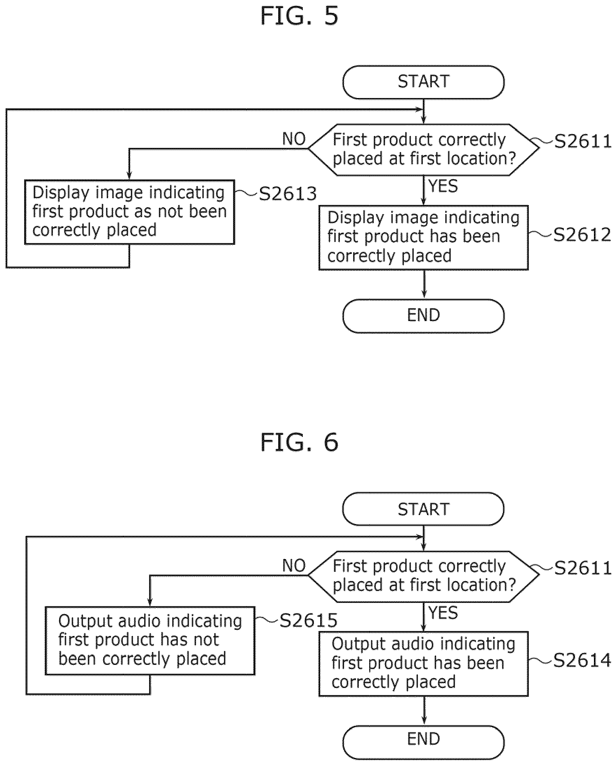

   FIG. 5 is a flowchart illustrating Operation Example 2 of the operation of a shipping system according to an embodiment of the present disclosure.
[FIG. 6]
   FIG. 6 is a flowchart illustrating Operation Example 3 of the operation of a shipping system according to an embodiment of the present disclosure.
[FIG. 7]

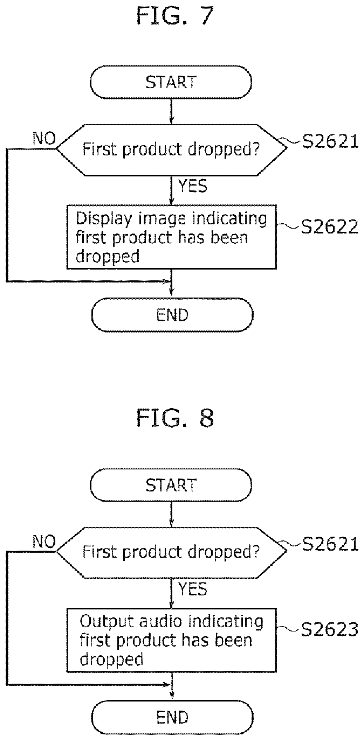

   FIG. 7 is a flowchart illustrating Operation Example 4 of the operation of a shipping system according to an embodiment of the present disclosure.
[FIG. 8]
   FIG. 8 is a flowchart illustrating Operation Example 5 of the operation of a shipping system according to an embodiment of the present disclosure.
[FIG. 9A]

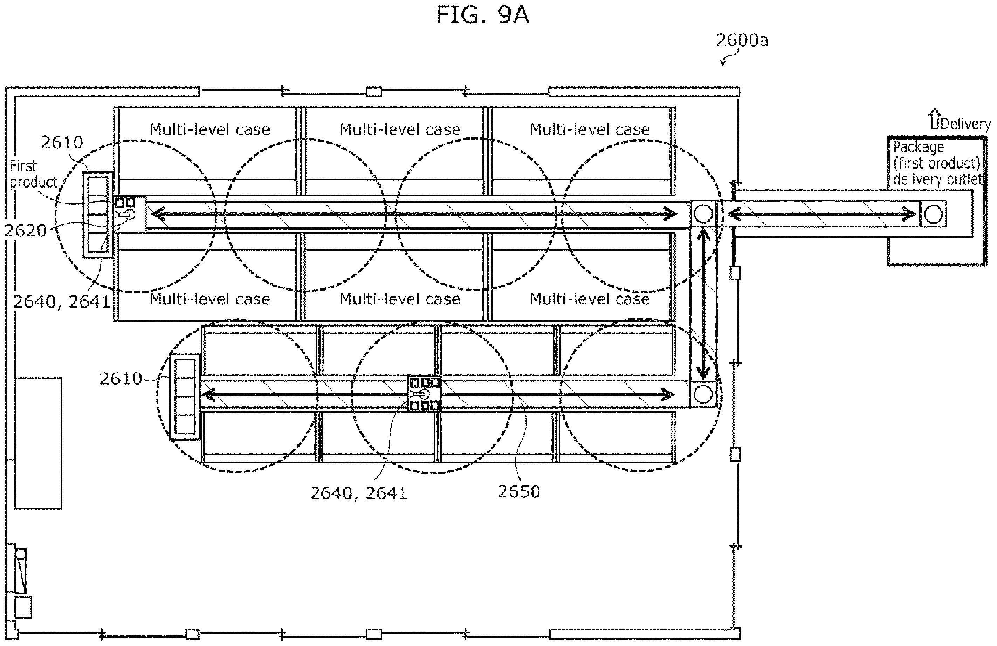

   FIG. 9A illustrates an example of a shipping system according to Variation 1 of an embodiment of the present disclosure.
[FIG. 9B]

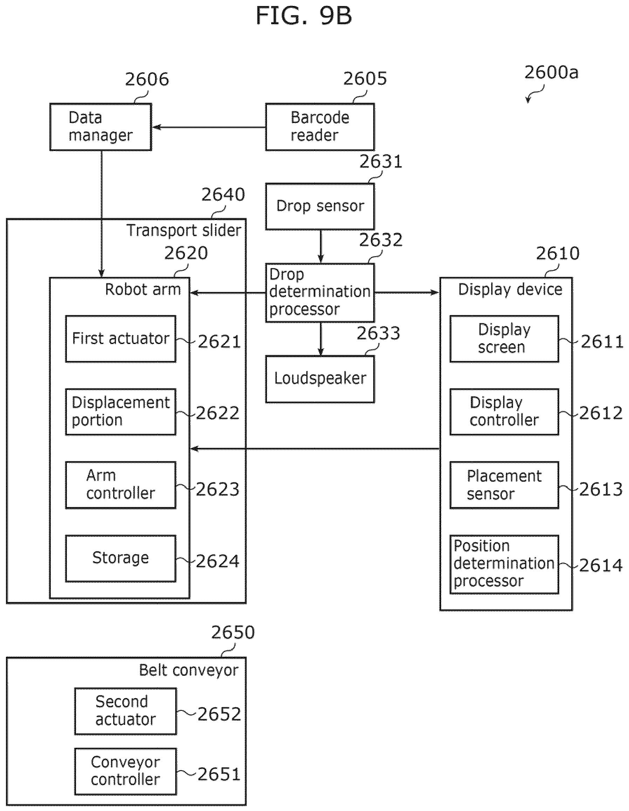

   FIG. 9B is a block diagram illustrating an example of a shipping system according to Variation 1 of an embodiment of the present disclosure.
[FIG. 10A]

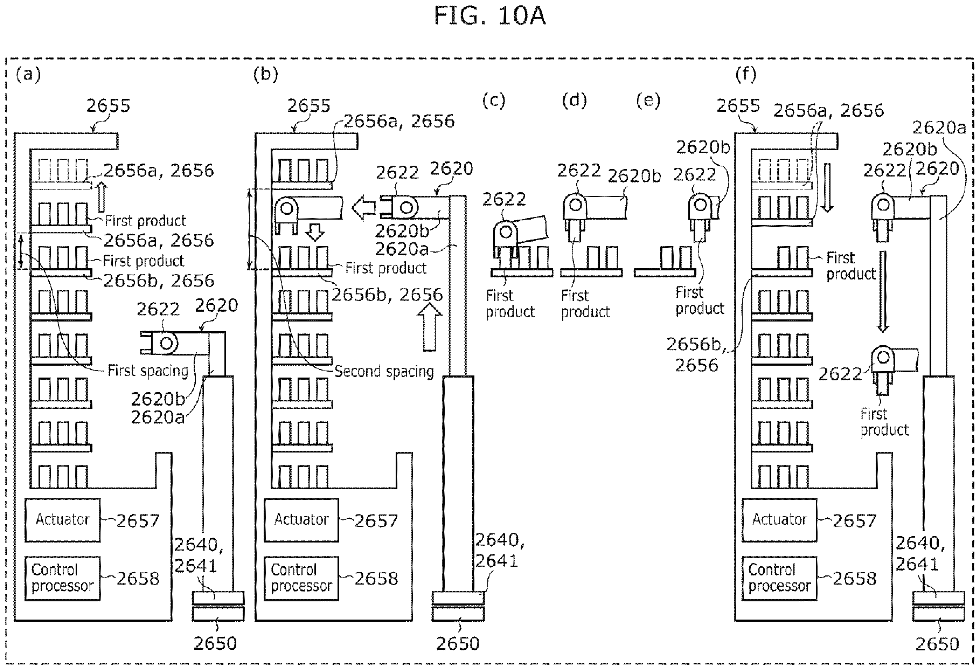

   FIG. 10A illustrates an example of a shipping system according to Variation 2 of an embodiment of the present disclosure.
[FIG. 10B]

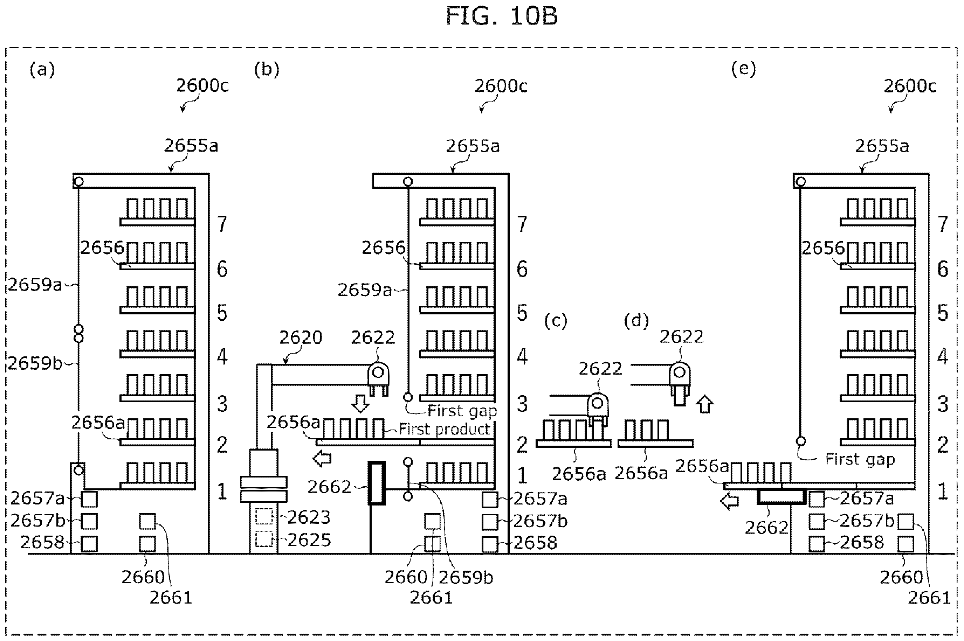

   FIG. 10B illustrates an example of a shipping system according to Variation 3 of an embodiment of the present disclosure.

### [Description of Embodiments]

These general and specific aspects may be implemented using a system, a method, an integrated circuit, a computer program, a computer-readable recording medium such as a CD-ROM, or any combination thereof.

The embodiments described below illustrate general or specific examples. The numerical values, shapes, materials, elements, the arrangement and connectivity of the elements, steps, the order of the steps, and so on given in the following embodiments are examples and are not intended to limit the present disclosure. Among elements described in the following embodiments, those not described in any of the independent claims are presented as optional elements.

Hereinafter, embodiments are specifically described with reference to the drawings.

### [Embodiment]

Hereinafter, shipping system 2600 according to the present embodiment will be described with reference to FIG. 1 through FIG. 3.

FIG. 1 illustrates an example of shipping system 2600 according to the embodiment. FIG. 2 illustrates an example of a stocked first product being placed on display device 2610 and displayed in a multi-level case in shipping system 2600 according to the embodiment. The dashed line in FIG. 2 illustrates the range of motion of robot arm 2620. FIG. 3 is a block diagram illustrating an example of shipping system 2600 according to the embodiment.

As illustrated in FIG. 1 through FIG. 3, when a user orders a first product via a terminal device and order information indicating the ordered first product is obtained, shipping system 2600 is used, for example, to ship (pick) the first product indicated in the obtained order information or to display the stocked first product in a multi-level case. Therefore, in shipping system 2600, the first product ordered by the user is first stocked and displayed in a multi-level case, and then the first product ordered by the user is delivered by the unmanned aerial vehicle, package transport device, etc., described in Embodiment 1, etc., above.

More specifically, in a store where the first product is displayed and shipped, this shipping system 2600 allows first products delivered to the store and removed from the delivery case, i.e., stocked first products, to be automatically displayed in a multi-level case using robot arm 2620 and display device 2610, etc. By placing the stocked first product in the placement area, which is display screen 2611 of display device 2610, robot arm 2620 in shipping system 2600 can lift the first product and display it in a predetermined location in the multi-level case. In shipping system 2600, when shipping the ordered first product, robot arm 2620 can remove the ordered first product from the multi-level case and move it into a package box for delivery. Since this allows a worker to carry the first product that has been moved to the package box and attach the first product to the unmanned transport device, the unmanned transport unit can deliver the first product to the user who ordered it.

Shipping system 2600 includes barcode reader 2605, data manager 2606, display device 2610, and robot arm 2620.

Barcode reader 2605 is capable of reading the barcode on the stocked first product when the first product is stocked. Barcode reader 2605 can read the barcode on the stocked first product by being used by a worker, but barcode reader 2605 may also be able to automatically read the barcode on the first product. Barcode reader 2605 outputs a unique first product ID associated with the read first product to data manager 2606. Barcode reader 2605 is one example of a sensor.

Data manager 2606 holds first and second databases, which are information on all products that users can order, and manages the first and second databases. Data manager 2606 includes storage 2624 such as memory, and storage 2624 stores the first and second databases.

The first database includes a plurality of items of data, each of which associates a product ID with a bottom image, arranged in a list. The product ID is an ID for identifying a product. The bottom image is an image showing the shape of the bottom of the product corresponding to the associated product ID. The first database may further include a plurality of items of data, each of which associates a product ID with an exterior image, arranged in a list. The product ID is an ID for identifying a product. The exterior image is an image showing the external appearance of the product corresponding to the associated product ID. Stated differently, the first database is a data table in which for each product, at least a product ID is associated with a bottom image, for example. The exterior image of the product may be an orthographic projection such as a plan view or frontal view of the product when the product is viewed from vertically above, or a product image showing the external appearance of the product.

The second database includes a plurality of items of data, each of which associates a product ID, which is an ID for identifying the product, with 3D data of the product corresponding to the product ID, arranged in a list. Stated differently, the second database is a data table in which for each product, a product ID is associated with 3D data of the product. Here, the 3D data includes the three-dimensional shape of the product, the size of the product, the height of the product, etc.

Data manager 2606 can obtain a first product ID identifying the first product based on the sensing data obtained from barcode reader 2605. When data manager 2606 obtains the first product ID from barcode reader 2605, it identifies the first bottom image, first exterior image, and 3D data corresponding to the obtained first product ID, from the first and second databases. Here, the first bottom image is an image showing the shape of the bottom of the first product, and is the bottom image corresponding to the first product ID among the plurality of bottom images included in the first database. The first exterior image is an image showing the external shape of the first product, and is the exterior image corresponding to first product ID among the plurality of exterior images included in the first database. The 3D data is the 3D data of the first product, and is the 3D data corresponding to the first product ID among the plurality of 3D data included in the first database.

Data manager 2606 outputs the identified first product ID and 3D data to robot arm 2620 and outputs the first bottom image and the first exterior image to display device 2610.

Display device 2610 is a display for displaying the first bottom image and the first exterior image of the first product on display screen 2611. For example, when the product is a container such as a PET bottle, if the first bottom image is circular when the PET bottle is upright, display device 2610 can display a first bottom image on display screen 2611 that is similar in shape and size to the bottom of the PET bottle. Display device 2610 displays the first bottom image and the first exterior image of the first product on display screen 2611 after barcode reader 2605 reads the first product ID of the first product.

More specifically, display device 2610 includes display controller 2612 that performs control for displaying the first bottom image and the first exterior image corresponding to the first product for which the first product ID has been read on display screen 2611. Note that display controller 2612 may be configured to display only the first bottom image on display screen 2611. Note that display controller 2612 need not be equipped in display device 2610 and may be a separate device from display device 2610.

More specifically, display device 2610 can obtain the first bottom image of the first product based on the first database and the obtained first product ID. This allows display controller 2612 of display device 2610 to display the first bottom image on display screen 2611, which is in the placement area for placing the first product. The placement area corresponds to the area on the display where the first bottom image is displayed, is the same size and shape as display screen 2611, and is synonymous with display screen 2611.

Note that display device 2610 may include a touch panel in the placement area where the image is displayed on display screen 2611. In such cases, display device 2610 may be configured to make it recognizable that the first product has been placed in the placement area. Display device 2610 may be a projector for projecting the first bottom image onto a screen. In such cases, the placement area corresponds to the area on the screen where the first bottom image is projected, and the area where the first bottom image is projected corresponds to display screen 2611.

Display device 2610 can also obtain the first exterior image, which is an image showing the external appearance of the first product, based on the first database and the obtained first product ID. This allows display controller 2612 of display device 2610 to display the first bottom image and additionally the first exterior image on display screen 2611, which is in the placement area for placing the first product.

Thus, since the first bottom image of the first product is displayed on display screen 2611 of display device 2610 or the first exterior image is displayed on display screen 2611 of display device 2610, a worker can place the first product whose first product ID has been read so that the first product is superimposed on a first location at which the first bottom image or the first exterior image is displayed on display screen 2611.

Display device 2610 further includes position determination processor 2614 that, when the first product is placed in the placement area, determines whether the first product is correctly placed at the first location in the placement area where the first bottom image is displayed on display screen 2611. Note that position determination processor 2614 need not include display device 2610; it is sufficient so long as position determination processor 2614 is included as an element of shipping system 2600. For example, position determination processor 2614 may be a separate device from display device 2610.

If position determination processor 2614 determines that the first product is correctly placed at the first location in the placement area, display controller 2612 controls display screen 2611 so as to display an image on display screen 2611 indicating that the first product is correctly placed at the first location. If position determination processor 2614 determines that the first product is not correctly placed at the first location, display controller 2612 controls display screen 2611 so as to display an image on display screen 2611 indicating that the first product is not correctly placed at the first location.

Shipping system 2600 may include loudspeaker 2633. In such cases, if position determination processor 2614 determines that the first product is correctly placed at the first location in the placement area, it may control loudspeaker 2633 to output audio indicating that the first product is correctly placed at the first location. If position determination processor 2614 determines that the first product is not correctly placed at the first location in the placement area, it may control loudspeaker 2633 to output audio indicating that the first product is not correctly placed at the first location.

In addition to display screen 2611 displaying an image indicating that the first product has been placed correctly, loudspeaker 2633 may output audio indicating that the first product has been placed correctly. In addition to display screen 2611 displaying an image indicating that the first product has not been placed correctly, loudspeaker 2633 may output audio indicating that the first product has not been placed correctly.

Shipping system 2600 may include drop sensor 2631 that detects dropping of the first product. In such cases, shipping system 2600 may further include drop determination processor 2632 that determines whether the first product lifted by robot arm 2620 has been dropped based on sensing data obtained from drop sensor 2631. Drop sensor 2631 is, for example, an infrared sensor or a camera sensor, and is one example of a sensor. Drop sensor 2631 may be installed in the store or on robot arm 2620.

If drop determination processor 2632 determines that the first product lifted by robot arm 2620 has been dropped, display controller 2612 may control display screen 2611 to display an image on display screen 2611 indicating that the first product has been dropped. If drop determination processor 2632 determines that the first product lifted by robot arm 2620 has been dropped, it may control loudspeaker 2633 to output audio indicating that the first product has been dropped.

If the first product lifted by robot arm 2620 has dropped, display screen 2611 may display an image indicating that the first product has dropped, and loudspeaker 2633 may output audio indicating that the first product has dropped.

Shipping system 2600 may include a camera capable of outputting image information, which is information indicating an image capturing the placement area and the first product placed in the placement area. In such cases, position determination processor 2614 may determine whether the first product is correctly placed at the first location based on image information obtained from the camera.

If position determination processor 2614 determines based on image information that the first product is correctly placed at the first location, display controller 2612 may control display screen 2611 so as to display an image on display screen 2611 indicating that the first product is correctly placed at the first location. Additionally, if position determination processor 2614 determines based on image information that the first product is correctly placed at the first location, it may cause loudspeaker 2633 to output audio indicating that the first product is correctly placed at the first location. If position determination processor 2614 determines based on image information that the first product is not correctly placed at the first location, display controller 2612 may control display screen 2611 so as to display an image on display screen 2611 indicating that the first product is not correctly placed at the first location. If position determination processor 2614 determines based on image information that the first product is not correctly placed at the first location, it may cause loudspeaker 2633 to output audio indicating that the first product is not correctly placed at the first location.

When the first product is placed at the first location where the first bottom image is displayed on display screen 2611, display controller 2612 outputs, to robot arm 2620, the first location information, which is information indicating the first location where the first bottom image is displayed in the placement area that is display screen 2611. The first location information is expressed, for example, as the coordinates of the first bottom image in the placement area. These coordinates are the same or substantially the same as the coordinates of the product placed in the placement area. The first location information may further include location information, which is information indicating the location where the first exterior image is displayed.

Display device 2610 may further include placement sensor 2613 that detects the placement of the first product at the first location where the first bottom image and the first exterior image of the first product are displayed on display screen 2611. Placement sensor 2613 is, for example, a camera, a pressure sensor, or an infrared sensor, and is one example of a sensor. When placement sensor 2613 detects the placement of the first product at the first location where the first bottom image and the first exterior image of the first product are displayed on display screen 2611, display controller 2612 stops displaying the first bottom image and the first exterior image of the first product on display screen 2611. Placement sensor 2613 is one example of a camera.

Robot arm 2620 is includes a plurality of arms and a plurality of joints (axles), etc., and can move freely, enabling it to lift and move the first product. Stated differently, robot arm 2620 can move the first product placed in the placement area of display device 2610 to a multi-level case for display, or move the first product displayed in the multi-level case to a package box.

More specifically, robot arm 2620 includes displacement portion 2622, first actuator 2621, arm controller 2623, and storage 2624.

Displacement portion 2622 can be actuated by first actuator 2621 to lift a target first product, which is one or more first products placed in the placement area, and change the position of the first product. Displacement portion 2622 includes a gripping portion capable of holding the first product by pinching the first product, a suction portion capable of holding the first product by sucking in air, or a magnetic portion capable of holding the first product by attracting the first product through magnetic force. In FIG. 2 and the like, an example is illustrated in which a gripping portion is used as one example of displacement portion 2622. Here, a target refers to the product that displacement portion 2622 is to lift.

Displacement portion 2622 can lift the first product placed in the placement area of display device 2610 and move the first product to inside the multi-level case to display it in the multi-level case. Displacement portion 2622 can lift the first product displayed in the multi-level case and move the first product to the package box.

First actuator 2621 can be controlled by arm controller 2623 to actuate displacement portion 2622. For example, under control by arm controller 2623, first actuator 2621 causes displacement portion 2622 to lift the first product placed in the placement area of display device 2610 and move the first product.

Arm controller 2623 can control the actuation of first actuator 2621. Arm controller 2623 can cause displacement portion 2622 to lift the first product by controlling first actuator 2621. More specifically, arm controller 2623 determines a method for lifting the first product using displacement portion 2622 by controlling first actuator 2621, using the second database, the first product ID, and the first location information, which is information indicating the first location where the first bottom image is displayed in the placement area.

Here, arm controller 2623 determining the method for lifting the first product using displacement portion 2622 includes arm controller 2623 determining a first part, which is a part for lifting the first product. More specifically, after the first product is placed at the first location in the placement area, arm controller 2623 controls first actuator 2621 to connect the first part of the first product placed in the placement area to displacement portion 2622. Stated differently, arm controller 2623 determines which part of the first product to connect to displacement portion 2622 in order to move the first product. This makes it less likely for the first product to drop from displacement portion 2622 even if the first product is moved after displacement portion 2622 lifts the first product.

After the first product is placed at the first location in the placement area, arm controller 2623 controls first actuator 2621 to lift the first product placed in the placement area using displacement portion 2622 according to the determined method, and move the first product into the multi-level case for display.

Based on information about the multi-level case stored in storage 2624 of robot arm 2620, control commands for first actuator 2621, etc., arm controller 2623 can link the first product ID with the placement location for the first product stored in multi-level case and store this information in storage 2624 upon robot arm 2620 storing the first product in a predetermined placement location in the multi-level case. Information about the multi-level case is information indicating, for example, the number of shelves in the multi-level case, the height of each shelf, the position of each shelf, the storage space of each shelf, and the distance from robot arm 2620 to each shelf. Therefore, robot arm 2620 can grab the first product having the first product ID indicated in the order information from the multi-level case and move it to the package box without a camera sensor or the like since the position of each first product displayed in the multi-level case is stored in storage 2624. This allows the first product indicated in the order information to be shipped.

### Operation Example 1

In this operation example, the operations from reading the first product ID of the stocked first product to displaying the product in the multi-level case will be described with reference to FIG. 4.

FIG. 4 is a flowchart illustrating Operation Example 1 of the operation of shipping system 2600 according to the embodiment.

First, as illustrated in FIG. 4, barcode reader 2605 reads the barcode on the stocked nth first product when the first product is stocked (S2601). Barcode reader 2605 outputs the first product ID associated with the read nth first product to data manager 2606.

Next, when data manager 2606 obtains the first product ID from barcode reader 2605, it identifies the first bottom image corresponding to the obtained first product ID from the first database, and identifies the 3D data corresponding to the obtained first product ID from the second database. Data manager 2606 outputs the identified first product ID and 3D data corresponding to the first product ID from the second database to robot arm 2620, and outputs the identified first bottom image from the first database to display device 2610 (S2602). When data manager 2606 obtains the first product ID from barcode reader 2605, it may further identify the first exterior image corresponding to the obtained first product ID, from the first database. In such cases, data manager 2606 may output the first exterior image to display device 2610.

Next, once display device 2610 obtains the first bottom image from data manager 2606, display device 2610 displays the obtained first bottom image on display screen 2611 (S2603). In other words, display controller 2612 of display device 2610 displays the first bottom image at the first location on display screen 2611, which is in the placement area for placing the first product. If display device 2610 obtains the first exterior image from data manager 2606, it may display the obtained first exterior image on display screen 2611. In such cases, display controller 2612 may additionally display the first exterior image at a specified location on display screen 2611, which is in the placement area for placing the first product. Display device 2610 outputs, to robot arm 2620, first location information in which the first bottom image is displayed in the placement area.

Next, the first product whose first product ID has been read by barcode reader 2605 is placed at the first location in the placement area (S2604). Although a worker places the first product whose first product ID has been read at the first location in the placement area in the present embodiment, a robot may place the first product at the first location in the placement area.

Next, robot arm 2620 moves the first product placed at the first location (S2605). More specifically, once the 3D data in the second database that corresponds to the identified first product ID and the first product ID are obtained from data manager 2606 and the first location information is obtained from display device 2610, robot arm 2620 causes displacement portion 2622 to lift and move the first product placed at the first location indicated by the first location information.

Next, robot arm 2620 determines whether or not the moving of the first product is complete (S2606). Stated differently, robot arm 2620 causes displacement portion 2622 to lift the first product placed at the first location and move the first product into the multi-level case by arm controller 2623 controlling first actuator 2621. At this time, robot arm 2620 determines whether the process of displaying the first product in the multi-level case has finished.

If robot arm 2620 determines that the moving of the first product is not complete (NO in S2606), robot arm 2620 returns to and executes step S2605.

However, if robot arm 2620 determines that the moving of the first product is complete (YES in S2606), it sets n = n + 1, which is the next first product (S2607). Shipping system 2600 then returns to step S2601 and repeats the process for the next product, the n+1th first product. Thus, when a first product is delivered to the store, shipping system 2600 reads the respective first product ID of each first product and lifts the first product placed in the placement area to display it in a multi-level case.

### Operation Example 2

In this operation example, the operations for a case in which the result of determining whether the first product has been correctly placed in the first location is displayed in an image in step S2604 of FIG. 4 will be described with reference to FIG. 5.

FIG. 5 is a flowchart illustrating Operation Example 2 of the operation of shipping system 2600 according to the embodiment.

First, as illustrated in FIG. 5, when the first product is placed in the placement area, position determination processor 2614 of display device 2610 determines whether the first product is correctly placed at the first location in the placement area where the first bottom image is displayed on display screen 2611 (S2611).

If position determination processor 2614 determines that the first product is correctly placed at the first location in the placement area (YES in S2611), display controller 2612 of display device 2610 controls display screen 2611 so as to display an image on display screen 2611 indicating that the first product is correctly placed at the first location (S2612). The processing in the flowchart of FIG. 5 then ends. As a result, since display device 2610 outputs, to robot arm 2620, first location information, which is information indicating the first location where the first product is placed, robot arm 2620 can lift the first product placed in the first location.

However, if position determination processor 2614 determines that the first product is not correctly placed at the first location (NO in S2611), display controller 2612 controls display screen 2611 so as to display an image on display screen 2611 indicating that the first product is not correctly placed at the first location (S2613), and the processing returns to step S2611 and executes step S2611. In such cases, the worker can recognize that the stocked first product is not placed in the correct location, and they can re-place the stocked first product in the correct location, i.e., the first location. As a result, since display device 2610 outputs, to robot arm 2620, first location information, which is information indicating the first location where the first product, after being repositioned, is placed, robot arm 2620 can lift the first product placed in the first location.

### Operation Example 3

In this operation example, the operations for a case in which the result of determining whether the first product has been correctly placed in the first location is outputted as audio in step S2604 of FIG. 4 will be described with reference to FIG. 6. Operations that are the same as in FIG. 5 are assigned with the same reference signs, and repeated description will be omitted as appropriate.

FIG. 6 is a flowchart illustrating Operation Example 3 of the operation of shipping system 2600 according to the embodiment.

As illustrated in FIG. 6, if YES in step S2611, shipping system 2600 causes loudspeaker 2633 to output audio indicating that the first product has been correctly placed in the first location (S2614). The processing in the flowchart of FIG. 6 then ends. As a result, since display device 2610 outputs, to robot arm 2620, first location information, which is information indicating the first location where the first product is placed, robot arm 2620 can lift the first product placed in the first location.

If NO in step S2611, shipping system 2600 causes loudspeaker 2633 to output audio indicating that the first product has not been correctly placed in the first location (S2615), and returns to and executes step S2611. In such cases, the worker can recognize that the stocked first product is not placed in the correct location, and they can re-place the stocked first product in the correct location, i.e., the first location. As a result, since display device 2610 outputs, to robot arm 2620, first location information, which is information indicating the first location where the first product, after being repositioned, is placed, robot arm 2620 can lift the first product placed in the first location.

### Operation Example 4

In this operation example, the operations for a case in which the result of determining whether the first product has fallen while being lifted and moved is displayed in an image in step S2606 of FIG. 4 will be described with reference to FIG. 7.

FIG. 7 is a flowchart illustrating Operation Example 4 of the operation of shipping system 2600 according to the embodiment.

First, as illustrated in FIG. 7, drop determination processor 2632 of shipping system 2600 determines whether the first product lifted by robot arm 2620 has been dropped (S2621).

If drop determination processor 2632 determines that the first product lifted by robot arm 2620 has been dropped (YES in S2621), display controller 2612 controls display screen 2611 so as to display an image on display screen 2611 indicating that the first product has been dropped (S2622). The processing in the flowchart of FIG. 7 then ends. This allows a worker to recognize that a stocked first product has been dropped, and they can have robot arm 2620 grab the stocked first product again. If drop determination processor 2632 determines that the first product lifted by robot arm 2620 has been dropped, it may stop the actuation of robot arm 2620.

However, if drop determination processor 2632 determines that the first product lifted by robot arm 2620 has not been dropped (NO in S2621), the processing in the flowchart of FIG. 7 ends.

### Operation Example 5

In this operation example, the operations for a case in which the result of determining whether the first product has fallen while being lifted and moved is outputted as audio in step S2606 of FIG. 4 will be described with reference to FIG. 8.

FIG. 8 is a flowchart illustrating Operation Example 5 of the operation of shipping system 2600 according to the embodiment.

As illustrated in FIG. 8, if YES in step S2621, shipping system 2600 controls display screen 2611 and causes loudspeaker 2633 to output audio indicating that the first product has been dropped (S2623). The processing in the flowchart of FIG. 8 then ends. This allows a worker to recognize that a stocked first product has been dropped, and they can have robot arm 2620 grab the stocked first product again.

However, if drop determination processor 2632 determines that the first product lifted by robot arm 2620 has not been dropped (NO in S2621), the processing in the flowchart of FIG. 8 ends.

### Advantageous Effects

Next, advantageous effects achieved by the control method, the program, and shipping system 2600 according to the present embodiment will be described.

The control method according to the present embodiment is a control method in shipping system 2600 including display device 2610, and includes: obtaining a first product ID identifying a first product, based on sensing data obtained from a sensor; obtaining a first bottom image showing a shape of a bottom of the first product, based on (i) a first database that associates and manages product IDs and images, each of which shows a shape of a bottom surface of the product corresponding to the product ID, and (ii) the obtained first product ID; and controlling display device 2610 to display the first bottom image in a placement area for placing the first product.

With this, since display device 2610 can display the first bottom image of the first product, the first product can be placed at the location where the first bottom image is displayed. Therefore, the location where the first product is placed can be presumed to be the location where the first bottom image is displayed without having to identify the location where the first product is placed using, for example, a sensor.

Therefore, with this control method, it is possible to easily presume the location where the first product is placed and inhibit a surge in the cost of shipping system 2600.

Shipping system 2600 according to the present embodiment executes the above-described control method.

This achieves the same above-described advantageous effects achieved by the control method.

The program according to the present embodiment is a program for causing shipping system 2600 to execute the control method.

This achieves the same above-described advantageous effects achieved by the control method.

In the control method according to the present embodiment, the first database further associates and manages product IDs and images, each of which shows the external appearance of the product corresponding to the product ID. The control method obtains the first bottom image and a first exterior image, which is an image showing the external appearance of the first product, based on the first database and the obtained first product ID, and controls display device 2610 to display the first bottom image and the first exterior image in the placement area.

With this, since display device 2610 can display the first bottom image and the first exterior image, the correct first product can be placed at the location where the first bottom image and the first exterior image are displayed. Therefore, by enabling smooth picking operations, etc., of stocked products, shipping system 2600 can inhibit a surge in the cost of energy, including shipping system 2600, and human resources.

In the control method according to the present embodiment, shipping system 2600 further includes robot arm 2620. Robot arm 2620 includes displacement portion 2622 that can lift a target first product, which is one or more first products placed in the placement area, and change the position of the first product. Displacement portion 2622 is actuated by first actuator 2621. The control method further includes: determining a method for lifting the first product using displacement portion 2622 using (i) a second database that associates and manages product IDs and 3D data, each item of 3D data being of the product corresponding to the product ID, (ii) the first product ID, and (iii) the first location information, which is information indicating the first location in the placement area where the first bottom image is displayed; and after the first product is placed at the first location in the placement area, controlling first actuator 2621 to lift the first product in the placement area using displacement portion 2622 according to the determined method.

With this, robot arm 2620 can lift the first product placed in the placement area of display device 2610 and move it to another location. Accordingly, this allows the stocked first product to be displayed in a predetermined location and allows the first product displayed to be removed and shipped.

The control method according to the present embodiment further includes: when the first product is placed in the placement area, determining whether the first product is correctly placed at the first location; if the first product is determined to be correctly placed at the first location, controlling display device 2610 to display an image on display device 2610 indicating that the first product is correctly placed at the first location; and if the first product is determined to be not correctly placed at the first location, controlling display device 2610 to display an image on display device 2610 indicating that the first product is not correctly placed at the first location.

With this, if the first product is correctly placed at the first location, an image indicating that the first product is correctly placed at the first location can be displayed. If the first product is not correctly placed at the first location, an image indicating that the first product is not correctly placed at the first location can be displayed. Accordingly, a worker can easily recognize whether the first product is correctly placed or not.

In the control method according to the present embodiment, shipping system 2600 further includes loudspeaker 2633. The control method further includes: when the first product is placed in the placement area, determining whether the first product is correctly placed at the first location; if the first product is determined to be correctly placed at the first location, controlling loudspeaker 2633 to cause loudspeaker 2633 to output audio indicating that the first product is correctly placed at the first location; and if the first product is determined to be not correctly placed, controlling loudspeaker 2633 to cause loudspeaker 2633 to output audio indicating that the first product is not correctly placed at the first location.

With this, if the first product is correctly placed at the first location, audio indicating that the first product is correctly placed at the first location can be output. If the first product is not correctly placed at the first location, audio indicating that the first product is not correctly placed at the first location can be output. Accordingly, a worker can easily recognize whether the first product is correctly placed or not.

The control method according to the present embodiment determines whether the first product is correctly placed based on image information obtained from the camera.

With this, it is possible to determine whether the first product is correctly placed or not using a camera. Additionally, it is possible to accurately determine whether the first product is correctly placed or not based on image information.

In the control method according to the present embodiment, displacement portion 2622 includes a gripping portion capable of holding the first product by pinching the first product, a suction portion capable of holding the first product by sucking in air, or a magnetic portion capable of holding the first product by attracting the first product through magnetic force.

With this, any type of first product can be lifted.

In the control method according to the present embodiment, displacement portion 2622 is a device for holding by pinching. In the control method, determining a method for lifting the first product using displacement portion 2622 includes determining a first part, which is a part for lifting the first product. The control method includes, after the first product is placed at the first location in the placement area, controlling the actuator to lift the first part of the first product in the placement area using displacement portion 2622.

With this, by determining a part of the first product by which to lift the first product and lifting the first product, it is possible to inhibit the lifted first product from dropping.

In the control method according to the present embodiment, shipping system 2600 further includes loudspeaker 2633. The control method further includes: determining whether the first product lifted by displacement portion 2622 has been dropped, based on the sensing result obtained from the sensor (drop sensor 2631); and after it is determined that the first product has been dropped, controlling loudspeaker 2633 to output audio indicating that the first product has been dropped.

With this, if the first product lifted by robot arm 2620 is dropped, audio indicating that the first product has been dropped can be output. Since a worker can easily recognize whether the first product is correctly placed or not, the worker can take measures such as collecting the dropped first product.

The control method according to the present embodiment further includes: determining whether the first product lifted by displacement portion 2622 has been dropped, based on the sensing result obtained from the sensor; and after it is determined that the first product has been dropped, controlling display device 2610 to output an image indicating that the first product has been dropped.

With this, if the first product lifted by robot arm 2620 is dropped, an image indicating that the first product has been dropped can be displayed. Since a worker can easily recognize whether the first product is correctly placed or not, the worker can take measures such as collecting the dropped first product.

In the control method according to the present embodiment, display device 2610 is a display for displaying, in the placement area, the first bottom image of the first product. The placement area corresponds to the area on the display where the first bottom image is displayed.

This enables the first bottom image to be displayed using a general-purpose display.

In the control method according to the present embodiment, the area on the display where the first bottom image is displayed includes a touch panel.

With this, by simply placing the stocked first product in the area where the first bottom image is displayed on the display, this can be used when determining whether the first product has been placed correctly.

In the control method according to the present embodiment, display device 2610 is a projector for projecting the first bottom image onto a screen. The placement area corresponds to the area on the screen where the first bottom image is projected.

With this, it is possible to determine whether the first product has been placed correctly or not using a projector.

### VARIATION 1 OF EMBODIMENT

Hereinafter, since the basic configuration of shipping system 2600a according to the present variation is the same as the basic configuration of the shipping system according to the embodiment, the same reference signs as above are used and repeated description of the basic configuration of shipping system 2600a in the present variation will be omitted where appropriate.

The configuration of the present variation will be described with reference to FIG. 9A through FIG. 9B.

FIG. 9A illustrates an example of shipping system 2600a according to Variation 1 of the embodiment. The dashed line in FIG. 9A illustrates the range of motion of robot arm 2620 when platform 2641 moves to a predetermined location on belt conveyor 2650. FIG. 9B is a block diagram illustrating an example of shipping system 2600a according to Variation 1 of the embodiment.

As illustrated in FIG. 9A and FIG. 9B, shipping system 2600a further includes belt conveyor 2650 for moving robot arm 2620.

Belt conveyor 2650 includes second actuator 2652, conveyor controller 2651, and transport slider 2640.

Belt conveyor 2650 is illustrated by the shaded hatching in FIG. 9A and is arranged along the direction in which the plurality of multi-level cases are lined up. Stated differently, a plurality of multi-level cases are arranged along the lengthwise direction of belt conveyor 2650. Belt conveyor 2650 can be actuated by second actuator 2652 to transport slider 2640 arranged on belt conveyor 2650 in the lengthwise direction of belt conveyor 2650, as indicated by the arrow.

Second actuator 2652 can be controlled by conveyor controller 2651 to actuate belt conveyor 2650. For example, second actuator 2652 can be controlled by conveyor controller 2651 to move transport slider 2640 to the front of a given multi-level case among the plurality of multi-level cases.

Conveyor controller 2651 can control the actuation of second actuator 2652. Conveyor controller 2651 can actuate or stop belt conveyor 2650 by controlling second actuator 2652. With this, since conveyor controller 2651 can control the movement of transport slider 2640 placed on belt conveyor 2650, conveyor controller 2651 can thus move transport slider 2640 to the front of a given multi-level case.

Transport slider 2640 includes platform 2641 that moves with robot arm 2620 by being actuated by belt conveyor 2650. Stated differently, platform 2641 is arranged on belt conveyor 2650 and can be moved by the actuation of belt conveyor 2650. Robot arm 2620 is arranged on platform 2641, and by being actuated by belt conveyor 2650, platform 2641 and robot arm 2620 move to the front of a given multi-level case.

Platform 2641 includes a cache area where a plurality of products can be placed. The cache area corresponds to the area on the upper surface of platform 2641. The cache area can also be said to correspond to the area on the upper surface of platform 2641 connected to robot arm 2620.

When placing a product on platform 2641, displacement portion 2622 of robot arm 2620 moves the first product from the placement area onto the cache area for temporary placement of the first product. Once at least the first product has been placed in the cache area, the cache area of platform 2641 moves with robot arm 2620 in accordance with the actuation of second actuator 2652.

When placing a plurality of products on platform 2641 of transport slider 2640, robot arm 2620 moves the first product, which is the first of the products, from the placement area and places it onto the cache area for temporary placement of the first product. After the second product is placed at the second location in the placement area, robot arm 2620 moves the second product from the placement area onto the cache area according to the determined method. Stated differently, robot arm 2620 moves the second product, which is the second of the products, from the placement area and places it onto the cache area for temporary placement of the second product.

After lifting the first product via displacement portion 2622, shipping system 2600a may actuate second actuator 2652 to move robot arm 2620 on belt conveyor 2650 to a first predetermined location for display. Stated differently, conveyor controller 2651 may control second actuator 2652 to move transport slider 2640 to a first predetermined location for display.

After robot arm 2620 arranged on belt conveyor 2650 moves to the first predetermined location, robot arm 2620 may actuate first actuator 2621 to move the first product lifted by displacement portion 2622 to a second predetermined location, which is a predetermined placement location.

In shipping system 2600a configured in this way, after a worker places the stocked first product in the placement area of display device 2610, robot arm 2620 can move the first product placed in the placement area onto the upper surface of platform 2641. More specifically, once a worker places the first product, which is the first of the products, in the placement area of display device 2610, robot arm 2620 places the first product in the cache area on the upper surface of platform 2641 after lifting the first product using displacement portion 2622. At this time, based on information about platform 2641 stored in storage 2624 and control commands for first actuator 2621, etc., robot arm 2620 can link the first product ID with the placement location for the first product placed in the cache area and store this information in storage 2624 upon placing the first product in the cache area. Information about platform 2641 is information indicating, for example, the height of platform 2641, the location of the cache area, the space of the cache area, and the distance from robot arm 2620 to the cache area. Therefore, robot arm 2620 can move to the first predetermined location, grab the first product having the first product ID placed in the cache area, and move it to the second predetermined location in the multi-level case without a camera sensor or the like, since the position of the first product placed in the cache area is stored in storage 2624. This allows the first product delivered to the store to be displayed in a multi-level case.

When a plurality of products such as the first product and the second product are placed in the cache area, once a worker places the first product, which is the first of the products, in the placement area of display device 2610, robot arm 2620 places the first product in the cache area on the upper surface of platform 2641. Subsequently, once a worker places the second product, which is the second of the products, in the placement area of display device 2610, robot arm 2620 places the second product in the cache area on the upper surface of platform 2641 after lifting the second product using displacement portion 2622. At this time, based on information about platform 2641 stored in storage 2624 and control commands for first actuator 2621, etc., robot arm 2620 can link the second product ID with the placement location for the second product placed in the cache area and store this information in storage 2624 upon placing the second product in the cache area. Therefore, robot arm 2620 can move to the first predetermined location, grab the second product having the second product ID placed in the cache area, and move it to the second predetermined location in the multi-level case without a camera sensor or the like, since the position of the second product placed in the cache area is stored in storage 2624. This allows the second product delivered to the store to be displayed in a multi-level case.

In the present variation, if the first product lifted by robot arm 2620 drops on belt conveyor 2650, belt conveyor 2650 may be actuated to move the first product to an unobstructed position. In such cases, a weight sensor may be provided to detect the first product dropped on belt conveyor 2650.

Next, advantageous effects achieved by the control method according to the present variation will be described.

In the control method according to the present variation, shipping system 2600a further includes belt conveyor 2650 for moving robot arm 2620. Belt conveyor 2650 is actuated by second actuator 2652. The control method further includes: actuating second actuator 2652 to move robot arm 2620 on belt conveyor 2650 to a first predetermined location after the first product is lifted by displacement portion 2622; and after robot arm 2620 on belt conveyor 2650 has moved to the first predetermined location, actuating first actuator 2621 to move the first product lifted by displacement portion 2622 to the second predetermined location.

This allows robot arm 2620 that has lifted the first product to move with the first product on belt conveyor 2650. This allows robot arm 2620 to move the first product to the second predetermined location even if the distance from the placement area to the second predetermined location is far.

The control method according to the present variation is a control method in shipping system 2600a including robot arm 2620 and display device 2610. Robot arm 2620 includes displacement portion 2622 which can lift a target and change the position of the target. Displacement portion 2622 is actuated by first actuator 2621, and shipping system 2600a further includes belt conveyor 2650 for moving robot arm 2620. Belt conveyor 2650 is actuated by second actuator 2652. The control method includes: obtaining a first product ID identifying a first product, based on sensing data obtained from a sensor; obtaining a first bottom image showing the shape of the bottom of the first product, based on (i) a first database that associates and manages product IDs and images, each of which shows a shape of a bottom surface of the product corresponding to the product ID, and (ii) the obtained first product ID; controlling display device 2610 to display the first bottom image in a placement area for placing the product; obtaining a second product ID identifying a second product, based on sensing data obtained from the sensor; obtaining a second bottom image showing the shape of the bottom of the second product, based on the first database and the obtained second product ID; controlling display device 2610 to display the second bottom image in the placement area; determining a method for lifting the first product using displacement portion 2622 using (i) a second database that associates and manages product IDs and 3D data, each item of 3D data being of the product corresponding to the product ID, (ii) the first product ID, and (iii) first location information, which is information indicating the first location in the placement area where the first bottom image is displayed; after the first product is placed in the first location in the placement area, controlling first actuator 2621 to lift the first product in the placement area using displacement portion 2622 according to the determined method; after lifting the first product, controlling first actuator 2621 to move the first product lifted by displacement portion 2622 to a cache area for temporary placement of the first product. The cache area moves with robot arm 2620 in accordance with the actuation of second actuator 2652. The control method further includes: determining a method for lifting the second product using displacement portion 2622 using the second database, the second product ID, and second location information, which is information indicating a second location in the placement area where the second bottom image is displayed; after the second product is placed at the second location in the placement area, controlling first actuator 2621 to lift the second product in the placement area using displacement portion 2622 according to the determined method; after lifting the second product, controlling first actuator 2621 to move the second product lifted by displacement portion 2622 to a cache area for temporary placement of the second product.

For example, if there is no cache area, the robot arm must lift the first product one at a time, move to a predetermined location for placing the first product, and then return after the move.

In contrast, with the present variation, it is possible to place a plurality of products on the cache area. This allows robot arm 2620 to collect a plurality of products in a short period of time, efficiently move them to a predetermined location, and place the products after the move.

Since display device 2610 can display the first bottom image of the first product, the first product can be placed at the location where the first bottom image is displayed. Therefore, the location where the first product is placed can be presumed to be the location where the first bottom image is displayed without having to identify the location where the first product is placed using, for example, a sensor. The same applies to the second product. Accordingly, with this control method, it is possible to easily identify the location where the first product and the second product are placed and inhibit a surge in the cost of shipping system 2600a.

Robot arm 2620 can lift the first product placed in the placement area of display device 2610 according to the 3D data of the first product, and can also move the first product to the cache area. After lifting the first product, robot arm 2620 can subsequently lift another second product according to the 3D data of that second product, and can also move that second product to the cache area. Thus, a plurality of products can be placed in the cache area in succession. This makes it possible to place a plurality of stocked products (first and second products) in the cache area, thus allowing a plurality of products to be moved at once. This allows a plurality of products to be displayed in a predetermined location and a plurality of displayed products to be removed and shipped.

Therefore, by enabling smooth picking operations, etc., of stocked products, shipping system 2600a can inhibit a surge in the cost of energy, including shipping system 2600a, and human resources.

In the control method according to the present variation, the cache area corresponds to the area of a part connected to robot arm 2620.

With this, since robot arm 2620 can be placed in the cache area, the first and second products along with robot arm 2620 can be moved to a second predetermined location, and thus a plurality of products can be displayed in a predetermined location and a plurality of displayed products can be removed and shipped. This makes it possible to inhibit an increase in the time required to display and ship a plurality of products.

In the control method according to the present variation, the cache area corresponds to an area on the upper surface of platform 2641 that moves with robot arm 2620 via belt conveyor 2650.

With this, robot arm 2620 can easily place the first and second products it lifted onto the upper surface of the platform.

### VARIATION 2 OF EMBODIMENT

Hereinafter, since the basic configuration of shipping system 2600b according to the present variation is the same as the basic configuration of the shipping system according to the embodiment, the same reference signs as above are used and repeated description of the basic configuration of shipping system 2600b in the present variation will be omitted where appropriate.

The configuration of the present variation will be described with reference to FIG. 10A.

FIG. 10A illustrates an example of shipping system 2600b according to Variation 2 of the embodiment. In FIG. 10A, (a) illustrates an example of first shelf 2656a, on which the first product is displayed, moving upward. The double-dotted lines indicate first shelf 2656a after it has been raised. In FIG. 10A, (b) illustrates an example of robot arm 2620 extending its second arm 2620b for the first product located at the back of second shelf 2656b. In FIG. 10A, (c) illustrates displacement portion 2622 of robot arm 2620 grabbing the first product. In FIG. 10A, (d) illustrates displacement portion 2622 of robot arm 2620 lifting the first product. In FIG. 10A, (e) illustrates robot arm 2620, which has lifted the first product, shortening its extended second arm 2620b. In FIG. 10A, (f) illustrates robot arm 2620 moving the first product it has lifted.

As illustrated in FIG. 10A, shipping system 2600b further includes multi-level case 2655. Shipping system 2600b may further include belt conveyor 2650 for moving the above-described robot arm 2620.

In multi-level case 2655, a plurality of shelves 2656 are arranged in a plurality of levels in the vertical direction. More specifically, multi-level case 2655 includes a plurality of shelves 2656, actuator 2657 that changes the anteroposterior position of each of the plurality of shelves 2656, and control processor 2658 that controls the actuation of actuator 2657. Multi-level case 2655 is one example of a showcase.

Each of the plurality of shelves 2656 is plate-shaped and arranged in an attitude parallel to the horizontal direction. Each of the plurality of shelves 2656 is a shelf for placing the first product. The plurality of shelves 2656 are aligned in a plurality of levels in the vertical direction. The first product is displayed on each of the plurality of shelves 2656 by robot arm 2620.

The plurality of shelves 2656 include first shelf 2656a and second shelf 2656b located one level below first shelf 2656a. In the present variation, two of the plurality of shelves 2656 that are adjacent to each other in the vertical direction, namely first shelf 2656a and second shelf 2656b, will be used as an example.

Each of the plurality of shelves 2656 can be moved in the vertical direction by the actuation of actuator 2657 controlled by control processor 2658.

Actuator 2657 can be controlled by control processor 2658 to move each of the plurality of shelves 2656 in the vertical direction. For example, actuator 2657 is controlled by control processor 2658 to move from, among the plurality of shelves 2656, the top shelf 2656 to a specified shelf 2656 in the vertical direction.

Control processor 2658 can change the distance between first shelf 2656a and second shelf 2656b by controlling actuator 2657. More specifically, when control processor 2658 obtains a first signal for requesting a larger vertical spacing between the first shelf 2656a and the second shelf 2656b, control processor 2658 can control actuator 2657 to change the spacing from a first spacing to a second spacing greater than the first spacing.

For example, as illustrated in (a) in FIG. 10A, when robot arm 2620 is to take the first product displayed on second shelf 2656b, which is the second shelf from the top, upon receiving the first signal from robot arm 2620, control processor 2658 can control actuator 2657 to raise the top shelf, which is first shelf 2656a. Since this causes first shelf 2656a to be raised by actuator 2657, the vertical spacing from second shelf 2656b changes from the first spacing to the second spacing.

To prevent the first product from contacting the ceiling of multi-level case 2655, before first shelf 2656a is raised, it is preferable that the spacing between first shelf 2656a on which the first product is placed and the ceiling of multi-level case 2655 is a third spacing that is greater than the first spacing. The third spacing may be the same as the second spacing, and, alternatively, may be greater than the second spacing. Stated differently, a space larger than the first spacing is formed between top shelf 2656 in multi-level case 2655 and the ceiling of multi-level case 2655.

As illustrated in (f) in FIG. 10A, when robot arm 2620 is to take the first product displayed at the back on second shelf 2656b, which is the second shelf from the top, upon receiving the second signal from robot arm 2620, control processor 2658 can control actuator 2657 to lower the top shelf, which is first shelf 2656a, back to its original position. Since this causes first shelf 2656a to be lowered by actuator 2657, the vertical spacing from second shelf 2656b changes from the second spacing to the first spacing.

Next, an operation example of shipping system 2600b according to the present variation will be given.

For example, in shipping system 2600, when shipping a first product based on order information from a user, it may be necessary to remove the first product to be shipped from the back of shelf 2656. Since shipping system 2600 manages all first products and multi-level cases 2655, it manages which first product to be shipped is located on which shelf 2656 of which multi-level case 2655. Upon shipping system 2600 using robot arm 2620 to remove a target first product from the back of shelf 2656, the target first product may be difficult to remove due to a first product located on the front of shelf 2656.

This operation example assumes that robot arm 2620 lifts and removes a target first product that is placed on second shelf 2656b and hidden behind another first product, and then ships the removed first product.

First, as illustrated in (a) in FIG. 10A, by moving transport slider 2640 using belt conveyor 2650, robot arm 2620 moves to the front of multi-level case 2655 that is displaying the target first product. Robot arm 2620 then outputs a first signal for requesting multi-level case 2655 to increase the vertical spacing between first shelf 2656a and second shelf 2656b. With this, control processor 2658 of multi-level case 2655 obtains the first signal.

Next, as illustrated in (a) and (b) in FIG. 10A, when control processor 2658 obtains the first signal, control processor 2658 controls actuator 2657 to change the vertical spacing between first shelf 2656a and second shelf 2656b from the first spacing to a second spacing greater than the first spacing. Stated differently, actuator 2657 is controlled by control processor 2658 to raise first shelf 2656a so that the first product does not touch the ceiling of multi-level case 2655. This increases the spacing between second shelf 2656b and first shelf 2656a where the target first product is located, allowing robot arm 2620 to insert displacement portion 2622 between them.

Next, as illustrated in (b) in FIG. 10A, robot arm 2620 extends first arm 2620a upward so that displacement portion 2622 is positioned at a height between first shelf 2656a and second shelf 2656b, and then extends second arm 2620b in the horizontal direction. Robot arm 2620 positions displacement portion 2622 above the target first product, which is located at the back of second shelf 2656b and hidden behind another first product, and displaces displacement portion 2622 to change the attitude of displacement portion 2622 so that the target first product can be grabbed.

Next, as illustrated in (c) and (d) in FIG. 10A, displacement portion 2622 of robot arm 2620 grabs and lifts the target first product.

Next, as illustrated in (e) in FIG. 10A, robot arm 2620 lifts the target first product and retracts the extended second arm 2620b.

Next, as shown in (f) of FIG. 10A, after robot arm 2620 removes the target first product, it outputs a second signal for requesting multi-level case 2655 to decrease (return to original) the vertical spacing between first shelf 2656a and second shelf 2656b. With this, control processor 2658 of multi-level case 2655 obtains the second signal.

Next, when control processor 2658 obtains the second signal, control processor 2658 controls actuator 2657 to change the vertical spacing between first shelf 2656a and second shelf 2656b from the second spacing to the first spacing. This returns the spacing between second shelf 2656b and first shelf 2656a to the original first spacing.

Next, as illustrated in (f) in FIG. 10A, when second arm 2620b of robot arm 2620 retracts to a predetermined amount, first arm 2620a retracts downward to a predetermined amount.

Robot arm 2620 can then place the lifted first product on platform 2641 of transport slider 2640. Robot arm 2620 does this until the target first product is removed from multi-level case 2655. Robot arm 2620 may move the target first product to the package box while the target first product is lifted, without placing the target first product on platform 2641 of transport slider 2640.

In shipping system 2600b, in cases in which the target first product is to be removed, it may be determined in advance whether the target first product can be removed without raising shelf 2656. If shipping system 2600b determines that shelf 2656 cannot be removed without raising the shelf, the shipping system 2600b may perform the operation example described above.

Although only top shelf 2656 is raised in the example given in the present variation, when, for example, the target first product is placed at the back on the third shelf 2656 from the top and hidden by another first product, upon receiving the first signal, control processor 2658 can control actuator 2657 to change the vertical spacing between second shelf 2656b and the third shelf (the third shelf 2656 from the top) from the first spacing to the second spacing. Stated differently, actuator 2657 is controlled by control processor 2658 to raise first shelf 2656a and second shelf 2656b so that the first product does not touch the ceiling of multi-level case 2655. This increases the spacing between second shelf 2656b and the third shelf where the target first product is located, allowing robot arm 2620 to insert displacement portion 2622. Thus, in the present variation, when robot arm 2620 takes a first product placed at the back of shelf 2656 and hidden behind another first product, it raises all of the shelves that are positioned above shelf 2656 where the target first product is placed.

Next, advantageous effects achieved by the control method according to the present variation will be described.

In the control method according to the present variation, shipping system 2600b further includes a showcase (multi-level case 2655), the showcase includes a plurality of shelves 2656 for placing a first product, the plurality of shelves 2656 forming a plurality of levels in a vertical direction, and actuator 2657 that changes the anteroposterior position of each of shelves 2656. The plurality of shelves 2656 include first shelf 2656a and second shelf 2656b located one level below first shelf 2656a. When shipping system 2600b obtains a first signal for requesting a larger vertical spacing between first shelf 2656a and second shelf 2656b, shipping system 2600b controls actuator 2657 to change the spacing from a first spacing to a second spacing greater than the first spacing.

With this, in the plurality of shelves 2656, even if the first product placed on shelf 2656 is placed at the back of shelf 2656 and hidden by another first product, robot arm 2620 can lift the first product at the back of shelf 2656 by increasing the vertical spacing between first shelf 2656a and second shelf 2656b. This allows the first product to be displayed in such a way that the space above shelf 2656 is effectively utilized, since the first product can be lifted no matter where the first product is placed on shelf 2656.

### VARIATION 3 OF EMBODIMENT

Hereinafter, since the basic configuration of shipping system 2600c according to the present variation is the same as the basic configuration of shipping system 2600c according to the embodiment, the same reference signs as above are used and repeated description of the basic configuration of shipping system 2600c in the present variation will be omitted where appropriate.

The configuration of the present variation will be described with reference to FIG. 10B. FIG. 10B illustrates an example of shipping system 2600c according to Variation 3 of the embodiment. In FIG. 10B, (a) illustrates an example of a plurality of shelves 2656 on which the first product is displayed. In FIG. 10B, (b) illustrates an example of robot arm 2620 extending its arm for the first product located at the back of first shelf 2656a. In FIG. 10B, (c) illustrates displacement portion 2622 of robot arm 2620 grabbing the first product. In FIG. 10B, (d) illustrates displacement portion 2622 of robot arm 2620 lifting the first product. In FIG. 10B, (e) illustrates an example of shelf 2656, on which the first product is displayed, sliding after front wall 2662 is rotated and tilted down. Note that the numbers 1 through 7 illustrated next to FIG. 10B indicate the number of levels of shelves 2656.

Shipping system 2600c includes multi-level case 2655a and robot arm 2620. Shipping system 2600c is one example of a showcase system.

As illustrated in (a) and (b) in FIG. 10B, multi-level case 2655a includes a plurality of shelves 2656 forming a plurality of levels in the vertical direction, first actuator 2657a that moves first shelf 2656a included in the plurality of shelves 2656 in the horizontal direction, signal obtainer 2660 that obtains a signal from outside multi-level case 2655a, signal transmitter 2661 that transmits a signal to the outside of multi-level case 2655a, control processor 2658, first curtain 2659a, second curtain 2659b, and second actuator 2657b. Multi-level case 2655a is one example of a showcase. Note that at least one of signal obtainer 2660 or signal transmitter 2661 may be provided in control processor 2658. Note that "outside" of multi-level case 2655a refers to, for example, robot arm 2620 or an external device external to multi-level case 2655a.

Each of the plurality of shelves 2656 is plate-shaped and arranged in an attitude parallel to the horizontal direction. Each of the plurality of shelves 2656 is a shelf for placing the first product. The plurality of shelves 2656 are aligned in the vertical direction. Each of the plurality of shelves 2656 is moved in the horizontal direction by first actuator 2657a.

First shelf 2656a of the plurality of shelves 2656 can be moved to a first position and a second position that is forward of the first position by being actuated by first actuator 2657a. The first position is a position where first shelf 2656a is housed in multi-level case 2655a. The second position is a position where first shelf 2656a slides and extends in the horizontal direction from multi-level case 2655a so as to protrude from multi-level case 2655a.

First curtain 2659a is located on the front of the plurality of shelves 2656 and extends from the upper area of multi-level case 2655a to the lower area. More specifically, the top end of first curtain 2659a is connected to the top plate of multi-level case 2655a, and the bottom end of first curtain 2659a can contact the top end of second curtain 2659b.

Second curtain 2659b is located on the front of the plurality of shelves 2656 and extends from the lower area of multi-level case 2655a to the upper area. More specifically, the bottom end of second curtain 2659b is connected to the bottom plate of multi-level case 2655a, and the top end of second curtain 2659b can contact the bottom end of first curtain 2659a.

The opening of multi-level case 2655a is covered by the bottom end of first curtain 2659a and the top end of second curtain 2659b contacting each other.

Second actuator 2657b actuates first curtain 2659a and second curtain 2659b. With this, the bottom end of first curtain 2659a and the top end of second curtain 2659b can move in the vertical direction. By separating the bottom end of first curtain 2659a from the top end of second curtain 2659b, the inside of multi-level case 2655a can be opened, exposing the plurality of shelves 2656. Note that second actuator 2657b may be provided for each of first curtain 2659a and second curtain 2659b.

Second actuator 2657b is controlled by control processor 2658 of multi-level case 2655a. When control processor 2658 obtains a signal for requesting that first shelf 2656a should be moved forward that has been obtained by signal obtainer 2660, control processor 2658 controls first actuator 2657a to move first shelf 2656a from the first position to the second position. More specifically, when the opening of multi-level case 2655a is covered, when control processor 2658 obtains a signal instructing that first shelf 2656a should be moved forward, control processor 2658 (1) controls second actuator 2657b to form a first gap between the bottom end of first curtain 2659a and the top end of second curtain 2659b, and (2) controls first actuator 2657a to move first shelf 2656a from the first position to the second position through the first gap. Control processor 2658 is one example of the controller.

Robot arm 2620 includes displacement portion 2622, arm controller 2623, and arm actuator 2625.

Displacement portion 2622 can be actuated by arm actuator 2625 to lift a target product (the first product), which is one or more products placed on first shelf 2656a, and the position of the target product can be changed by moving the product lifted by robot arm 2620 out of multi-level case 2655a. Displacement portion 2622 includes a gripping portion capable of holding the first product by pinching the first product, a suction portion capable of holding the first product by sucking in air, or a magnetic portion capable of holding the first product by attracting the first product through magnetic force.

Displacement portion 2622 can lift the first product placed on shelf 2656 and move the first product to inside multi-level case 2655a to display it on another shelf 2656 or in another multi-level case 2655a.

Arm actuator 2625 actuates displacement portion 2622. More specifically, arm actuator 2625 can be controlled by arm controller 2623 to actuate displacement portion 2622. "Arm actuator 2625" may be read as "first actuator 2621" described above. Therefore, arm actuator 2625 may have the same functional configuration as first actuator 2621.

When arm controller 2623 obtains a signal instructing it to remove the first product on first shelf 2656a, it lifts the product placed on first shelf 2656a using robot arm 2620, and after the product lifted by robot arm 2620 has been moved outside multi-level case 2655a, first actuator 2657a is controlled by control processor 2658 to move first shelf 2656a from the first position to the second position, and arm actuator 2625 is controlled to displace the position of the first product on first shelf 2656a using displacement portion 2622.

When the opening (the front retrieval opening) of multi-level case 2655a is covered by first curtain 2659a and second curtain 2659b, when control processor 2658 obtains a signal instructing to remove the first product from first shelf 2656a, control processor 2658 (1) controls second actuator 2657b to form a first gap between the bottom end of first curtain 2659a and the top end of second curtain 2659b, and (2) controls first actuator 2657a to move first shelf 2656a from the first position to the second position through the first gap. After moving first shelf 2656a to the second position, control processor 2658 transmits, to robot arm 2620 via signal transmitter 2661, a signal indicating that first shelf 2656a has been moved forward. Arm controller 2623 of robot arm 2620 (3) controls arm actuator 2625 to displace the position of the first product on first shelf 2656a using displacement portion 2622.

Next, an operation example of shipping system 2600c according to the present variation will be given.

As illustrated in (b) in FIG. 10B, for example, in shipping system 2600c, when shipping a first product based on order information from a user, it may be necessary to remove the first product to be shipped from the back of shelf 2656. Since shipping system 2600c manages all first products and multi-level cases 2655a, it manages which first product to be shipped is located on which shelf 2656 of which multi-level case 2655a. Upon shipping system 2600c using robot arm 2620 to remove a target first product from the back of shelf 2656, the target first product may be difficult to remove due to a first product located on the front of shelf 2656.

This operation example assumes that robot arm 2620 lifts and removes a target first product by moving shelf 2656, and then ships the removed first product.

First, as illustrated in (a) in FIG. 10B, there are times when the opening of multi-level case 2655a is covered. Therefore, when robot arm 2620 goes to remove the first product, control processor 2658 obtains a signal from the data manager instructing that first shelf 2656a should be moved forward when the opening of multi-level case 2655a is covered.

As illustrated in (b) of FIG. 10B, when control processor 2658 obtains a signal instructing that first shelf 2656a should be moved forward, control processor 2658 controls second actuator 2657b to form a first gap between the bottom end of first curtain 2659a and the top end of second curtain 2659b. Control processor 2658 controls second actuator 2657b so as to form a first gap in front of the shelf from which the first product is to be removed (first shelf 2656a). This separates the bottom end of first curtain 2659a from the top end of second curtain 2659b, creating a first gap in front of first shelf 2656a from which the first product is to be removed. In (b) in FIG. 10B, an example is illustrated in which the first gap is formed in front of the second shelf 2656 from the bottom.

Next, based on a signal instructing that first shelf 2656a should be moved forward, after the product placed on first shelf 2656a is lifted by robot arm 2620 and the product lifted by robot arm 2620 is moved out of multi-level case 2655a, control processor 2658 controls first actuator 2657a to move first shelf 2656a from the first position to the second position through the first gap. This causes first shelf 2656a, from which the first product is to be removed, to slide and move in the horizontal direction from the first position to the second position. This allows first shelf 2656a to protrude from multi-level case 2655a along with the first product, whereby robot arm 2620 can grab the first product from above.

Next, as illustrated in (b) in FIG. 10B, when arm controller 2623 obtains a signal instructing it to remove the first product on first shelf 2656a, it controls arm actuator 2625 to move displacement portion 2622 to a position vertically above the first product to be removed. More specifically, robot arm 2620 moves displacement portion 2622 in the horizontal direction to a position vertically above the first product to be removed.

Next, as illustrated in (c) and (d) in FIG. 10B, displacement portion 2622 of robot arm 2620 descends, grabs, and lifts the target first product to be retrieved.

This results in arm controller 2623 controlling arm actuator 2625 to displace the position of the first product on first shelf 2656a using displacement portion 2622.

In this way, displacement portion 2622 can lift the first product placed on first shelf 2656a and place it into a package box for shipping.

Note that as illustrated in (d) in FIG. 10B, for example, when horizontally sliding and moving shelf 2656 located at the lowest level among the plurality of shelves 2656 of multi-level case 2655a (i.e., moving it from the first position to the second position), it comes into contact with front wall 2662 of multi-level case 2655a. Therefore, when horizontally sliding and moving shelf 2656 that comes into contact with front wall 2662 of multi-level case 2655a among the plurality of shelves 2656, a configuration in which front wall 2662 of multi-level case 2655a is rotated and tilted down to inhibit contact between front wall 2662 of multi-level case 2655a and shelf 2656 is acceptable. More specifically, control processor 2658 may control another actuator of multi-level case 2655a to rotate front wall 2662 in cases in which shelf 2656 which would come into contact with front wall 2662 of multi-level case 2655a is to be moved from the first position to the second position.

Next, advantageous effects achieved by multi-level case 2655 according to the present variation will be described.

The showcase (multi-level case 2655) according to the present variation includes a plurality of shelves 2656 for placing products, the plurality of shelves 2656 forming a plurality of levels in a vertical direction, an actuator that changes the anteroposterior position of each of the plurality of shelves 2656, signal obtainer 2660 that obtains a signal from outside the showcase, and a controller (control processor 2658) that controls the actuator. The plurality of shelves 2656 include first shelf 2656a. When the controller obtains a signal obtained by signal obtainer 2660, the signal being for requesting that first shelf 2656a be moved forward, the controller controls the actuator (first actuator 2657a) to move first shelf 2656a from the first position to a second position located forward of the first position.

This allows first shelf 2656a to be moved forward from the first position. This makes it easier to place a product on first shelf 2656a and remove a product placed on first shelf 2656a.

In the showcase according to the present variation, the signal is transmitted based on an instruction from a controller that controls robot arm 2620 capable of placing products on the showcase.

This allows first shelf 2656a to be moved forward from the first position by robot arm 2620 transmitting a signal. It can be expected that first shelf 2656a will be moved forward from the first position at the timing when robot arm 2620 places a product on first shelf 2656a, or at the timing when robot arm 2620 removes and grasps a product from first shelf 2656a. Robot arm 2620 can therefore smoothly place products onto first shelf 2656a and remove of products from first shelf 2656a. Consequently, it is possible to improve the overall operational efficiency, including the showcase and robot arm 2620.

The showcase according to present variation further includes signal transmitter 2661 that transmits a signal to an outside of the showcase. After moving first shelf 2656a to the second position, the controller transmits, to robot arm 2620 via signal transmitter 2661, a signal indicating that first shelf 2656a has been moved forward.

With this, by the controller transmitting a signal to robot arm 2620, robot arm 2620 can recognize the timing for placing a product onto first shelf 2656a or removing a product from first shelf 2656a. Robot arm 2620 can therefore smoothly place products onto first shelf 2656a and remove of products from first shelf 2656a. Consequently, it is possible to improve the overall operational efficiency, including the showcase and robot arm 2620.

In the showcase according to the present variation, the controller further controls the actuator to move first shelf 2656a from the first position to the second position after the product placed on first shelf 2656a has been lifted by robot arm 2620 and the product lifted by robot arm 2620 has been moved outside the showcase.

This allows first shelf 2656a to be quickly moved to the second position when robot arm 2620 lifts a product.

### OTHER VARIATIONS

Although the present disclosure has been described above based on various embodiments, the present disclosure is not limited to these embodiments. The embodiment includes the above-described Variation 1 to Variation 3 of the embodiment and other variations.

Each element included in the shipping system and the showcase according to the above embodiment may be implemented by dedicated hardware or through execution of a software program suitable for the element. Each element may be implemented by a program executing unit, such as a CPU or a processor, reading and executing a software program recorded on a recording medium, such as a hard disk or a semiconductor memory.

The elements of the shipping system and the showcase are typically implemented as an LSI circuit, which is an integrated circuit. These processors may be realized as individual chips, or a portion or all of the processors may be realized collectively as a single chip.

Moreover, circuit integration is not limited to LSI; the processors may be realized as dedicated circuits or generic processors. A field programmable gate array (FPGA) that is programmable after the LSI circuit is manufactured, or a reconfigurable processor whose connections and settings regarding circuit cells in the LSI circuit are reconfigurable, may be used.

In the above embodiments, each element may be implemented by dedicated hardware or through execution of a software program suitable for the element. Each element may be implemented by a program executing unit, such as a CPU or a processor, reading and executing a software program recorded on a recording medium, such as a hard disk or a semiconductor memory.

All of the values used above are mere examples used for illustrative purposes; the embodiments of the present disclosure are not limited to the exemplary values.

The block diagrams illustrate one example of the division of functional blocks; a plurality of functional blocks may be realized as a single functional block, a single functional block may be broken up into a plurality of functional blocks, and part of one function may be transferred to another functional block. The functions of a plurality of functional blocks having similar functions may be processed by a single piece of hardware or software in parallel or by time-division.

The order in which the steps in the flowcharts are executed are mere examples in order to specifically describe the present disclosure, and may include orders other than those exemplified. Moreover, some of the steps may be executed at the same time as (in parallel with) other steps.

Although the control method, program, shipping system, and showcase have been described based on embodiments, the present disclosure is not limited to these embodiments. Various modifications of the exemplary embodiments as well as embodiments resulting from arbitrary combinations of elements of different exemplary embodiments that may be conceived by those skilled in the art are intended to be included within the scope of one or more aspects of the present disclosure as long as they do not depart from the essence of the present disclosure.

### [Industrial Applicability]

The present disclosure is applicable to, for example, a showcase for displaying products and a shipping system for products.

### ADDITIONAL STATEMENTS

Below, features of the control method, program, shipping system, and showcase described based on the above embodiments are disclosed.

### <Technique 1>

A control method used in a shipping system including a display device, the control method including:
obtaining a first product ID identifying a first product, based on sensing data obtained from a sensor;
obtaining a first bottom image showing a shape of a bottom of the first product, based on (i) a first database that associates and manages product IDs and images each of which shows a shape of a bottom surface of a product corresponding to the product ID, and (ii) the first product ID obtained; and
controlling the display device to display the first bottom image in a placement area for placing the first product.

### <Technique 1a>

Another expression of the shipping system is as follows.

A control method used in a shipping system including a display device, the control method including:
obtaining a first product ID identifying a first product, based on sensing data obtained from a sensor;
obtaining a first bottom image showing a shape of a bottom of the first product, based on (i) a first database that associates and manages product IDs and images each of which shows a shape of a bottom surface of a product corresponding to the product ID, and (ii) the first product ID obtained; and
controlling the display device to display the first bottom image in a placement area for placing the first product, wherein
the control device is a display, and
the placement area corresponds to an area on the display where the first bottom image is to be displayed.

### <Technique 1b>

Yet another expression of the shipping system is as follows.

A control method used in a shipping system including a display device and a robot arm, the control method including:
obtaining a first product ID identifying a first product, based on sensing data obtained from a sensor;
obtaining a first bottom image showing a shape of a bottom of the first product, based on (i) a first database that associates and manages product IDs and images, each of which shows a shape of a bottom surface of the product corresponding to the product ID, and (ii) the obtained first product ID; and
controlling the display device to display the first bottom image in a placement area for placing the first product.

### <Technique 1c>

Yet another expression of the shipping system is as follows.

A control method used in a shipping system including a display device, the control method including:
obtaining a first product ID identifying a first product, based on sensing data obtained from a sensor;
obtaining a first bottom image showing a shape of a bottom of the first product, based on (i) a first database that associates and manages product IDs and images, each of which shows a shape of a bottom surface of the product corresponding to the product ID, and (ii) the obtained first product ID;
controlling the display device to display the first bottom image in a placement area for placing the first product; and
after the first product placed on the first bottom image displayed in the placement area is lifted by the robot arm, controlling the display device to erase the first bottom image.

### <Technique 2>

The control method according to Technique 1, wherein
the first database further associates and manages the product IDs and images each of which shows an external appearance of the product corresponding to the product ID, and
the control method further comprises:
   obtaining the first bottom image and a first exterior image showing an external appearance of the first product, based on the first database and the first product ID obtained; and
   controlling the display device to display the first bottom image and the first exterior image in the placement area.

### <Technique 3>

The control method according to Technique 1 or 2, wherein
the shipping system further includes a robot arm,
the robot arm includes a displacement portion that lifts, from among one or more first products each of which is the first product and placed in the placement area, one or more target first products and changes a position of the one or more target first products,
the displacement portion is actuated by the first actuator, and
the control method further comprises:
   determining a method for lifting the one or more target first products using the displacement portion by using (i) a second database that associates and manages the product IDs and 3D data, each item of 3D data being of the product corresponding to the product ID, (ii) the first product ID, and (iii) first location information indicating a first location in the placement area where the first bottom image is to be displayed; and
   after the one or more first products are placed at the first location in the placement area, controlling the first actuator to lift the one or more target first products in the placement area using the displacement portion according to the determined method.

### <Technique 4>

The control method according to any one of Techniques 1 to 3, wherein
when the first product is placed in the placement area, determining whether the first product is correctly placed at a first location in the placement area;
when the first product is determined to be correctly placed at the first location, controlling the display device to display an image on the display device indicating that the first product is correctly placed at the first location; and
when the first product is determined to be not correctly placed at the first location, controlling the display device to display an image on the display device indicating that the first product is not correctly placed at the first location.

### <Technique 5>

The control method according to any one of Techniques 1 to 4, wherein
the shipping system further includes a loudspeaker, and
the control method further comprises:
   when the first product is placed in the placement area, determining whether the first product is correctly placed at a first location in the placement area;
   when the first product is determined to be correctly placed at the first location, controlling the loudspeaker to output audio indicating that the first product is correctly placed at the first location; and
   when the first product is determined to be not correctly placed, controlling the loudspeaker to output audio indicating that the first product is not correctly placed at the first location.

### <Technique 6>

The control method according to Technique 4 or 5, wherein
the determining includes determining whether the first product is correctly placed based on image information obtained from a camera.

### <Technique 7>

The control method according to Technique 3, wherein
the displacement portion includes a gripping portion capable of holding the one or more target first products by pinching, a suction portion capable of holding the one or more target first products by sucking in air, or a magnetic portion capable of holding the one or more target first products by attraction through magnetic force.

### <Technique 8>

The control method according to Technique 7, wherein
the displacement portion is a device for holding by pinching,
the determining of the method for lifting the one or more target first products using the displacement portion includes determining a first part of the one or more target first products which is a part for lifting the one or more target first products, and
the controlling of the first actuator includes, after the one or more first products are placed at the first location in the placement area, controlling the first actuator to lift the first part of the one or more target first products in the placement area using the displacement portion.

### <Technique 9>

The control method according to any one of Techniques 3, 7, or 8, wherein
the shipping system further includes a belt conveyor for moving the robot arm, the belt conveyor being actuated by a second actuator, and
the control method further comprises:
   after the one or more target first products are lifted by the displacement portion, actuating the second actuator to move the robot arm on the belt conveyor to a first predetermined location; and
   after the robot arm on the belt conveyor has moved to the first predetermined location, actuating the first actuator to move the one or more target first products lifted by the displacement portion to a second predetermined location.

### <Technique 10>

The control method according to any one of Techniques 3, 7, 8, or 9, wherein
the shipping system further includes a loudspeaker, and
the control method further comprises:
   determining whether the one or more target first products lifted by the displacement portion have been dropped, based on a sensing result obtained from a sensor; and
   after it is determined that the one or more target first products have been dropped, controlling the loudspeaker to output audio indicating that the one or more target first products have been dropped.

### <Technique 11>

The control method according to any one of Techniques 3, 7, 8, 9, or 10, further comprising:
determining whether the one or more target first products lifted by the displacement portion have been dropped, based on a sensing result obtained from a sensor; and
after it is determined that the one or more target first products have been dropped, controlling the display device to output an image indicating that the one or more target first products have been dropped.

### <Technique 12>

A control method in a shipping system including a robot arm and a display device, the robot arm including a displacement portion actuated by a first actuator and configured to lift and change a position of a target, the shipping system further including a belt conveyor that is actuated by a second actuator and is for moving the robot arm, the control method comprising:
obtaining a first product ID identifying a first product, based on sensing data obtained from a sensor;
obtaining a first bottom image showing a shape of a bottom of the first product, based on (i) a first database that associates and manages product IDs and images, each of which shows a shape of a bottom surface of a product corresponding to the product ID, and (ii) the first product ID obtained;
controlling the display device to display the first bottom image in a placement area for placing the product;
obtaining a second product ID identifying a second product, based on sensing data obtained from a sensor;
obtaining a second bottom image showing a shape of a bottom of the second product, based on the first database and the second product ID obtained;
controlling the display device to display the second bottom image in the placement area;
determining a method for lifting the first product using the displacement portion by using (i) a second database that associates and manages the product IDs and 3D data, each item of the 3D data being of the product corresponding to the product ID, (ii) the first product ID, and (iii) first location information indicating a first location in the placement area where the first bottom image is to be displayed;
after the first product is placed at the first location in the placement area, controlling the first actuator to lift the first product in the placement area using the displacement portion according to the determined method;
after the first product has been lifted, controlling the first actuator to move the first product lifted by the displacement portion onto a cache area for temporary placement of the first product, the cache area moving with the robot arm in accordance with actuation of the second actuator;
determining a method for lifting the second product using the displacement portion by using (i) the second database, (ii) the second product ID, and (iii) second location information indicating a second location in the placement area where the second bottom image is to be displayed;
after the second product is placed at the second location in the placement area, controlling the first actuator to lift the second product in the placement area using the displacement portion according to the determined method; and
after the second product has been lifted, controlling the first actuator to move the second product lifted by the displacement portion onto a cache area for temporary placement of the second product.

### <Technique 13>

The control method according to Technique 12, wherein
the cache area corresponds to an area of a part connected to the robot arm.

### <Technique 14>

The control method according to Technique 12 or 13, wherein
the cache area corresponds to an area on an upper surface of a platform that moves with the robot arm via the belt conveyor.

### <Technique 15>

The control method according to any one of Techniques 1 to 14, wherein
the shipping system further includes a showcase,
the showcase includes:
   a plurality of shelves for placing the product, the plurality of shelves forming a plurality of levels in a vertical direction; and
   an actuator that changes an anteroposterior position of each of the plurality of shelves,
the plurality of shelves include a first shelf, and
when the showcase obtains a first signal for requesting to move the first shelf forward, the showcase controls the actuator to move the first shelf from a first position to a second position located forward of the first position.

### <Technique 16>

The control method according to any one of Techniques 1 to 15, wherein
the display device is a display for displaying, in the placement area, the first bottom image of the first product, and
the placement area corresponds to an area on the display where the first bottom image is to be displayed.

### <Technique 17>

The control method according to Technique 16, wherein
the display includes a touch panel in the area where the first bottom image is to be displayed.

### <Technique 18>

The control method according to any one of Techniques 1 to 17, wherein
the display device is a projector for projecting the first bottom image onto a screen, and the placement area corresponds to an area on the screen where the first bottom image is to be projected.

### <Technique 19>

A shipping system that executes the control method according to any one of Techniques 1 to 18.

### <Technique 20>

A program for causing the shipping system to execute the control method according to any one of Techniques 1 to 18.

### <Technique 21>

A showcase comprising:
a plurality of shelves for placing a product, the plurality of shelves forming a plurality of levels in a vertical direction;
an actuator that changes an anteroposterior position of each of the plurality of shelves;
a signal obtainer that obtains a signal from outside the showcase; and
a controller that controls the actuator, wherein
the plurality of shelves include a first shelf, and
when the controller obtains the signal obtained by the signal obtainer, the signal being for requesting to move the first shelf forward, the controller controls the actuator to move the first shelf from a first position to a second position located forward of the first position.

### <Technique 22>

The showcase according to Technique 21, wherein
the signal is transmitted based on an instruction from the controller that controls a robot arm capable of placing the product on the showcase.

### <Technique 23>

The showcase according to Technique 22, further comprising:
a signal transmitter that transmits a signal to outside the showcase, wherein
after moving the first shelf to the second position, the controller transmits, to the robot arm via the signal transmitter, a signal indicating that the first shelf has been moved forward.

### <Technique 24>

The showcase according to any one of Techniques 21 to 23, wherein
the controller further controls the actuator to move the first shelf from the first position to the second position after the product placed on the first shelf has been lifted by a robot arm and the product lifted by the robot arm has been moved outside the showcase.

Note that whether a product placed on the first shelf has been picked up by the robot arm and the product picked up by the robot arm has been moved outside the showcase may be determined based on, for example, a sensing result obtained from a sensor, or a signal transmitted based on an instruction from a controller that controls the robot arm and indicates that the product has moved outside the showcase. For example, the sensor may be a weight sensor provided on the first shelf, or a camera. The sensor may be a camera provided on the robot arm, or a camera provided in the store. For example, after a product having been lifted has been detected based on a sensing result from a weight sensor provided on the first shelf, the product may be determined to have been moved outside the showcase after elapse of a predetermined amount of time.

### [Reference Signs List]

2600, 2600a, 2600b, 2600c shipping system
2605 barcode reader (sensor)
2610 display device
2613 placement sensor (camera, sensor)
2620 robot arm
2621 first actuator
2622 displacement portion (gripping portion, suction portion, magnetic portion)
2631 drop sensor (sensor)
2633 loudspeaker
2641 platform
2650 belt conveyor
2652 second actuator
2655, 2655a multi-level case (showcase)
2656 shelf
2656a first shelf
2656bsecond shelf
2657 actuator
2657a first actuator (actuator)
2657bsecond actuator (actuator)
2658 control processor (controller)
2660 signal obtainer
2661 signal transmitter

## Claims

1. A control method used in a shipping system including a display device, the control method including:
obtaining a first product ID identifying a first product, based on sensing data obtained from a sensor;
obtaining a first bottom image showing a shape of a bottom of the first product, based on (i) a first database that associates and manages product IDs and images each of which shows a shape of a bottom surface of a product corresponding to the product ID, and (ii) the first product ID obtained; and
controlling the display device to display the first bottom image in a placement area for placing the first product.

2. The control method according to claim 1, wherein
the first database further associates and manages the product IDs and images each of which shows an external appearance of the product corresponding to the product ID, and
the control method further comprises:
obtaining the first bottom image and a first exterior image showing an external appearance of the first product, based on the first database and the first product ID obtained; and
controlling the display device to display the first bottom image and the first exterior image in the placement area.

3. The control method according to claim 1 or 2, wherein
the shipping system further includes a robot arm,
the robot arm includes a displacement portion that lifts, from among one or more first products each of which is the first product and placed in the placement area, one or more target first products and changes a position of the one or more target first products,
the displacement portion is actuated by the first actuator, and
the control method further comprises:
determining a method for lifting the one or more target first products using the displacement portion by using (i) a second database that associates and manages the product IDs and 3D data, each item of 3D data being of the product corresponding to the product ID, (ii) the first product ID, and (iii) first location information indicating a first location in the placement area where the first bottom image is to be displayed; and
after the one or more first products are placed at the first location in the placement area, controlling the first actuator to lift the one or more target first products in the placement area using the displacement portion according to the determined method.

4. The control method according to any one of claims 1 to 3, further comprising:
when the first product is placed in the placement area, determining whether the first product is correctly placed at a first location in the placement area;
when the first product is determined to be correctly placed at the first location, controlling the display device to display an image on the display device indicating that the first product is correctly placed at the first location; and
when the first product is determined to be not correctly placed at the first location, controlling the display device to display an image on the display device indicating that the first product is not correctly placed at the first location.

5. The control method according to any one of claims 1 to 4, wherein
the shipping system further includes a loudspeaker, and
the control method further comprises:
when the first product is placed in the placement area, determining whether the first product is correctly placed at a first location in the placement area;
when the first product is determined to be correctly placed at the first location, controlling the loudspeaker to output audio indicating that the first product is correctly placed at the first location; and
when the first product is determined to be not correctly placed, controlling the loudspeaker to output audio indicating that the first product is not correctly placed at the first location.

6. The control method according to claim 4 or 5, wherein:
the determining includes determining whether the first product is correctly placed based on image information obtained from a camera.

7. The control method according to claim 3, wherein
the displacement portion includes a gripping portion capable of holding the one or more target first products by pinching, a suction portion capable of holding the one or more target first products by sucking in air, or a magnetic portion capable of holding the one or more target first products by attraction through magnetic force.

8. The control method according to claim 7, wherein
the displacement portion is a device for holding by pinching,
the determining of the method for lifting the one or more target first products using the displacement portion includes determining a first part of the one or more target first products which is a part for lifting the one or more target first products, and
the controlling of the first actuator includes, after the one or more first products are placed at the first location in the placement area, controlling the first actuator to lift the first part of the one or more target first products in the placement area using the displacement portion.

9. The control method according to any one of claims 3, 7, or 8, wherein
the shipping system further includes a belt conveyor for moving the robot arm, the belt conveyor being actuated by a second actuator, and
the control method further comprises:
after the one or more target first products are lifted by the displacement portion, actuating the second actuator to move the robot arm on the belt conveyor to a first predetermined location; and
after the robot arm on the belt conveyor has moved to the first predetermined location, actuating the first actuator to move the one or more target first products lifted by the displacement portion to a second predetermined location.

10. The control method according to any one of claims 3, 7, 8, or 9, wherein
the shipping system further includes a loudspeaker, and
the control method further comprises:
determining whether the one or more target first products lifted by the displacement portion have been dropped, based on a sensing result obtained from a sensor; and
after it is determined that the one or more target first products have been dropped, controlling the loudspeaker to output audio indicating that the one or more target first products have been dropped.

11. The control method according to any one of claims 3, 7, 8, 9, or 10, further comprising:
determining whether the one or more target first products lifted by the displacement portion have been dropped, based on a sensing result obtained from a sensor; and
after it is determined that the one or more target first products have been dropped, controlling the display device to output an image indicating that the one or more target first products have been dropped.

12. A control method in a shipping system including a robot arm and a display device, the robot arm including a displacement portion actuated by a first actuator and configured to lift and change a position of a target, the shipping system further including a belt conveyor that is actuated by a second actuator and is for moving the robot arm, the control method comprising:
obtaining a first product ID identifying a first product, based on sensing data obtained from a sensor;
obtaining a first bottom image showing a shape of a bottom of the first product, based on (i) a first database that associates and manages product IDs and images, each of which shows a shape of a bottom surface of a product corresponding to the product ID, and (ii) the first product ID obtained;
controlling the display device to display the first bottom image in a placement area for placing the product;
obtaining a second product ID identifying a second product, based on sensing data obtained from a sensor;
obtaining a second bottom image showing a shape of a bottom of the second product, based on the first database and the second product ID obtained;
controlling the display device to display the second bottom image in the placement area;
determining a method for lifting the first product using the displacement portion by using (i) a second database that associates and manages the product IDs and 3D data, each item of the 3D data being of the product corresponding to the product ID, (ii) the first product ID, and (iii) first location information indicating a first location in the placement area where the first bottom image is to be displayed;
after the first product is placed at the first location in the placement area, controlling the first actuator to lift the first product in the placement area using the displacement portion according to the determined method;
after the first product has been lifted, controlling the first actuator to move the first product lifted by the displacement portion onto a cache area for temporary placement of the first product, the cache area moving with the robot arm in accordance with actuation of the second actuator;
determining a method for lifting the second product using the displacement portion by using (i) the second database, (ii) the second product ID, and (iii) second location information indicating a second location in the placement area where the second bottom image is to be displayed;
after the second product is placed at the second location in the placement area, controlling the first actuator to lift the second product in the placement area using the displacement portion according to the determined method; and
after the second product has been lifted, controlling the first actuator to move the second product lifted by the displacement portion onto a cache area for temporary placement of the second product.

13. The control method according to claim 12, wherein
the cache area corresponds to an area of a part connected to the robot arm.

14. The control method according to claim 12 or 13, wherein
the cache area corresponds to an area on an upper surface of a platform that moves with the robot arm via the belt conveyor.

15. The control method according to any one of claims 1 to 14, wherein
the shipping system further includes a showcase,
the showcase includes:
a plurality of shelves for placing the product, the plurality of shelves forming a plurality of levels in a vertical direction; and
an actuator that changes an anteroposterior position of each of the plurality of shelves,
the plurality of shelves include a first shelf, and
when the showcase obtains a first signal for requesting to move the first shelf forward, the showcase controls the actuator to move the first shelf from a first position to a second position located forward of the first position.

16. The control method according to any one of claims 1 to 15, wherein
the display device is a display for displaying, in the placement area, the first bottom image of the first product, and
the placement area corresponds to an area on the display where the first bottom image is to be displayed.

17. The control method according to claim 16, wherein
the display includes a touch panel in the area where the first bottom image is to be displayed.

18. The control method according to any one of claims 1 to 17, wherein
the display device is a projector for projecting the first bottom image onto a screen, and the placement area corresponds to an area on the screen where the first bottom image is to be projected.

19. A shipping system that executes the control method according to any one of claims 1 to 18.

20. A program for causing the shipping system to execute the control method according to any one of claims 1 to 18.

21. A showcase comprising:
a plurality of shelves for placing a product, the plurality of shelves forming a plurality of levels in a vertical direction;
an actuator that changes an anteroposterior position of each of the plurality of shelves;
a signal obtainer that obtains a signal from outside the showcase; and
a controller that controls the actuator, wherein
the plurality of shelves include a first shelf, and
when the controller obtains the signal obtained by the signal obtainer, the signal being for requesting to move the first shelf forward, the controller controls the actuator to move the first shelf from a first position to a second position located forward of the first position.

22. The showcase according to claim 21, wherein
the signal is transmitted based on an instruction from the controller that controls a robot arm capable of placing the product on the showcase.

23. The showcase according to claim 22, further comprising:
a signal transmitter that transmits a signal to outside the showcase, wherein
after moving the first shelf to the second position, the controller transmits, to the robot arm via the signal transmitter, a signal indicating that the first shelf has been moved forward.

24. The showcase according to any one of claims 21 to 23, wherein
the controller further controls the actuator to move the first shelf from the first position to the second position after the product placed on the first shelf has been lifted by a robot arm and the product lifted by the robot arm has been moved outside the showcase.
